**Europäisches Patentamt**

**European Patent Office**

**Office européen des brevets**

(19)

(11) **EP 1 484 575 A1**

(12) **EUROPEAN PATENT APPLICATION**
published in accordance with Art. 158(3) EPC

| | |
|---|---|
| (43) Date of publication:<br>**08.12.2004 Bulletin 2004/50** | (51) Int Cl.⁷: **G01B 11/26** |
| (21) Application number: **02777952.9** | (86) International application number:<br>**PCT/JP2002/011092** |
| (22) Date of filing: **25.10.2002** | (87) International publication number:<br>**WO 2003/076873 (18.09.2003 Gazette 2003/38)** |

| | |
|---|---|
| (84) Designated Contracting States:<br>**AT BE BG CH CY CZ DE DK EE ES FI FR GB GR IE IT LI LU MC NL PT SE SK TR**<br><br>(30) Priority: **08.03.2002 JP 2002064021**<br><br>(71) Applicant: **Olympus Corporation**<br>**Tokyo 151-0072 (JP)** | (72) Inventor: **MARUYAMA, Tsukuru**<br>**Sagamihara-shi, Kanagawa 229-1116 (JP)**<br><br>(74) Representative:<br>**von Hellfeld, Axel, Dr. Dipl.-Phys. et al**<br>**Wuesthoff & Wuesthoff**<br>**Patent- und Rechtsanwälte**<br>**Schweigerstrasse 2**<br>**81541 München (DE)** |

(54) **MIRROR ANGLE DETECTOR, OPTICAL SIGNAL SWITCH SYSTEM, AND OPTICAL SIGNAL SWITCHING METHOD**

(57) A mirror angle detecting device includes a movable portion having at least a mirror; a support drive portion that tilts the movable portion; a light source that emits light to the movable portion; a beam splitter that changes the optical path of reflected light from the movable portion; a photodetector that receives the reflected light from the movable portion and that detects a tilt amount of the mirror; and at least one condenser lens disposed between the photodetector and the movable portion.

## FIG.1

# FIG.20

**Description**

TECHNICAL FIELD

The present invention generally relates to a mirror angle detecting device, an optical signal switching system, and an optical signal switching method. More particularly, the present invention relates to a mirror angle detecting device that has a wide detecting range with respect to the tilt of the mirror and that is compact in size, an optical signal switching system, and an optical signal switching method.

BACKGROUND ART

Hitherto, a galvano-mirror has been used for tracking detection means for an optical pickup in an optical disk device, optical switching means of optical fiber used for an optical communication, or the like. For example, in the galvano-mirror device used for the tracking detection means, a tilt amount of a galvano-mirror is detected, and a fine tracking control is performed based on the detected tilt amount.

Such tilt sensors or mirror angle detecting devices are disclosed in, for example, Japanese Examined Patent Application Publication No. 7-66554, and Japanese Unexamined Patent Application Publication Nos. 8-227552, 11-144273, and 11-144274.

The tilt sensor in the Japanese Examined Patent Application Publication No. 7-66554 is used to detect a relative angle formed between the optical axis of an emitted beam of an optical pickup toward a recording medium and the recording surface of the recording medium, and comprises a light-emitting element that irradiates the recording surface with diffused light, and two light-receiving elements disposed on the opposite sides of the light-emitting element, the two light-receiving elements detecting the reflected light from the recording surfaces. The tilt amount of a mirror when the recording medium tilts is detected by taking a difference in the amount of the reflected light detected by the two light-receiving elements.

Likewise, the tilt sensor in the Japanese Unexamined Patent Application Publication No. 8-227552 receives reflected light from a recording medium by a quadripartite light-receiving surfaces of detecting means, and detects tilt amounts in two directions by taking a difference in the amount of the received light between the two light-receiving surfaces.

Also, the tilt sensor in the Japanese Unexamined Patent Application Publication No. 11-144273 or 11-144274 detects a tilt angle by detecting reflected light from a deflection mirror through a beam splitter that changes in the reflectance according to the incident angle.

However, in the method set forth in the Japanese Examined Patent Application Publication No. 7-66554, since the light-receiving elements as detectors are limited in size, the range of detectable angles is restricted, thereby inhibiting detection over a wide range of tilt amounts. In addition, this tilt sensor can detect only one-dimensional tilt.

The method set forth in the Japanese Unexamined Patent Application Publication No. 8-227552 has also the same problem as that of the Japanese Examined Patent Application Publication No. 7-66554. Additionally, when attempting to increase the detection range of tilt amount, it is necessary to enlarge the light-receiving surface of a detector and to simultaneously increase the sizes of other members. This raises a problem that the overall size of the device becomes too large.

Furthermore, in each of the methods set forth in the Japanese Unexamined Patent Application Publication Nos. 11-144273 and 11-144274, unless the property of the reflecting film on a beam splitter is improved, the detection accuracy of the detector will deteriorate. Also, as in the case described above, when attempting to increase the detection range, the overall mechanical layout becomes too large.

Accordingly, it is an object of the present invention to solve the above-described problems caused by conventional arts, and to provide a mirror angle detecting device that has a wide detecting range with respect to the tilt mount and that is compact in size, an optical signal switching system, and an optical signal switching method.

DISCLOSURE OF INVENTION

The mirror angle detecting device according to the present invention comprises a movable portion having at least a mirror; a support drive portion that tilts the movable portion; a light source that emits light to the movable portion; a beam splitter that changes the optical path of reflected light from the movable portion; a photodetector that receives the reflected light from the movable portion and that detects a tilt amount of the mirror; and at least one condenser lens disposed between the photodetector and the movable portion.

The optical signal switching system according to the present invention comprises an input cable unit that includes a plurality of input cables through the inside of which an optical signal is transmitted; an output cable unit that includes a plurality of output cables that receive the optical signal transmitted from the input cable unit, and that allow the optical signal to be transmitted through the inside thereof; and an optical signal switching device disposed between the input cable unit and the output cable unit, the optical signal switching device causing one of the plurality of output cables to selectively transmit the optical signal inputted from at least one of the plurality of input cables. The optical signal switching device at least includes a mirror that is arranged so that the tilt angle thereof can be deflected in order to selectively change the optical path of the optical signal emitted from the input cable, and a deflection angle detecting device that detects deflection angle of the mirror. Here, the deflection angle detecting device includes a light source that emits detection light on the back surface of the mirror, and a photodetector that receives the detection light reflected by the mirror and that detects the amount of deflection angle of the mirror.

The optical signal switching method according to the present invention is a method for causing an optical signal emitted from at least one of a plurality of input cables to be selectively transmitted to one of a plurality of output cables. This method includes the step of specifying the place of the input cable from which an inputted optical signal is to be emitted, out of the plurality of input cables, and specifying the place of the output cable to transmit the optical signal, out of the plurality of output cables; the step of emitting position detecting light onto the back surface of at least one mirror disposed between the input cable and the output cable, detecting the deflection amount of the tilt angle of the mirror by receiving, by an photodetector, the position detecting light reflected from the back surface of the mirror, and adjusting the tilt angle of the mirror; and the step of connecting the optical path of the specified input cable and that of the specified output cable by the mirror, the tilt angle of which has been changed, and causing the optical signal to be selectively transmitted.

The mirror angle detecting device according to the present invention comprises a light source that emits light to a mirror that tilts in at least one dimensional direction; a photodetector that receives the reflected light from the mirror, and that detects the position of a light spot of the reflected light; a beam splitter that changes the optical path of the reflected light from the mirror so as to head toward the photodetector; and a condenser lens disposed between the photodetector and the mirror.

The mirror angle detecting device according to another aspect of the present invention comprises a light source that emits light to a movable portion having a mirror rotatable about a support shaft; a first condenser lens that makes the light source substantially parallel light; a beam splitter that separates the parallel light obtained through the first condenser lens and the reflected light from the movable portion; a photodetector that receives the reflected light separated by the beam splitter, and that detects the tilt amount of the mirror; and a second condenser lens disposed between the beam splitter and the mirror, that condense the reflected light onto the photodetector.

BRIEF DESCRIPTION OF THE DRAWINGS

Fig. 1 is a plan view showing a galvano-mirror device according to a first embodiment of the present invention;
Fig. 2 is a front view showing the galvano-mirror device in Fig. 1;
Fig. 3 is a view explaining an example of design data of the device in the first embodiment;
Fig. 4 is a view explaining the movement of a light spot on the light-receiving surface of a photodetector when the galvano-mirror tilts in a one-dimensional direction (X-direction or Y-direction);
Fig. 5 is a view explaining the movement of a light spot on the light-receiving surface of a photodetector when the galvano-mirror tilts in two-dimensional directions (X-direction and Y-direction);
Fig. 6 is a view showing an output state of the photodetector with respect to the tilt of the galvano-meter;
Fig. 7 is a plan view showing another configuration example of the galvano-mirror device according to the first embodiment;
Fig. 8 is a view explaining the movement of a light spot on the light-receiving surface of the photodetector when the galvano-mirror tilts in two-dimensional directions (X-direction and Y-direction) in a galvano-mirror device according to a second embodiment of the present invention;
Fig. 9 is a view showing an output state of the photodetector with respect to the tilt of the galvano-meter, in the configuration in Fig. 8;
Fig. 10 is a plan view showing a galvano-mirror device according to a third embodiment of the present invention;
Fig. 11 is a view explaining an example of design data of the device according to the third embodiment;
Fig. 12 is a plan view showing another galvano-mirror device according to the third embodiment;
Fig. 13 is a plan view showing the overall configuration of a tilt sensor according to a fourth embodiment of the present invention;
Fig. 14 is a view explaining the movement of a light spot on the light-receiving surface of a photodetector when the galvano- mirror tilts in a one-dimensional direction (X-direction or Y-direction);
Fig. 15 is a view showing an output state of the photodetector with respect to the tilt of the galvano-meter;
Fig. 16 is a view explaining the movement of a light spot on the light-receiving surface of the photodetector when the galvano-mirror tilts in two-dimensional directions (X-direction and Y-direction);

Fig. 17 is a view explaining the movement of a light spot on the light-receiving surface of the photodetector when the galvano-mirror tilts in two-dimensional directions (X-direction and Y-direction), in a galvano-mirror device according to a fifth embodiment of the present invention;

Fig. 18 is a plan view showing a galvano-mirror device according to a sixth embodiment of the present invention;

Fig. 19 is a front view illustrating the galvano-mirror device shown in Fig. 17;

Fig. 20 is a view explaining the configuration of an optical signal switching system as an application example; and

Fig. 21 is a view explaining the fundamental configuration of a magneto-optical disk as an application example.

BEST MODE FOR CARRYING OUT THE INVENTION

Hereinafter, the embodiments according to the present invention will be described with reference to the drawings. First Embodiment

First, detailed reference will be made to a first embodiment of the present invention referring to the accompanying drawings.

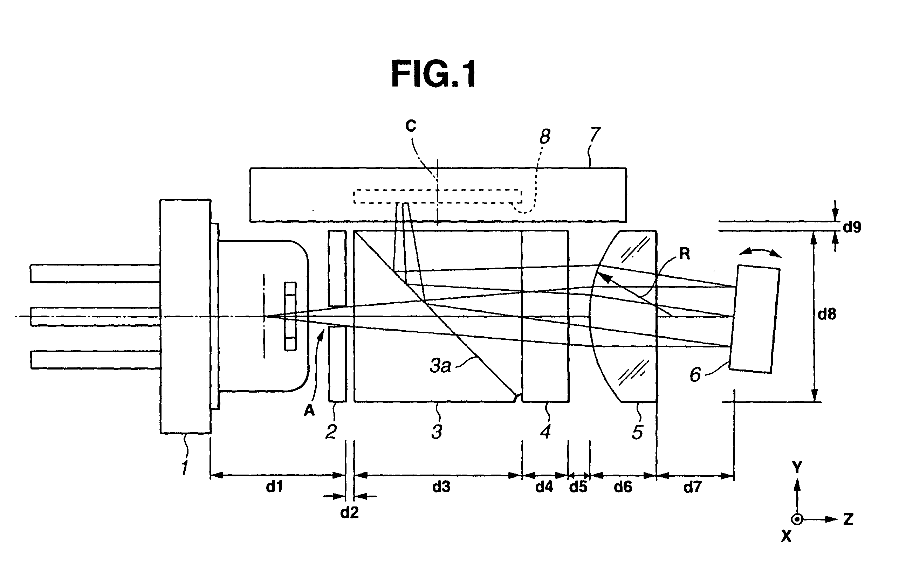

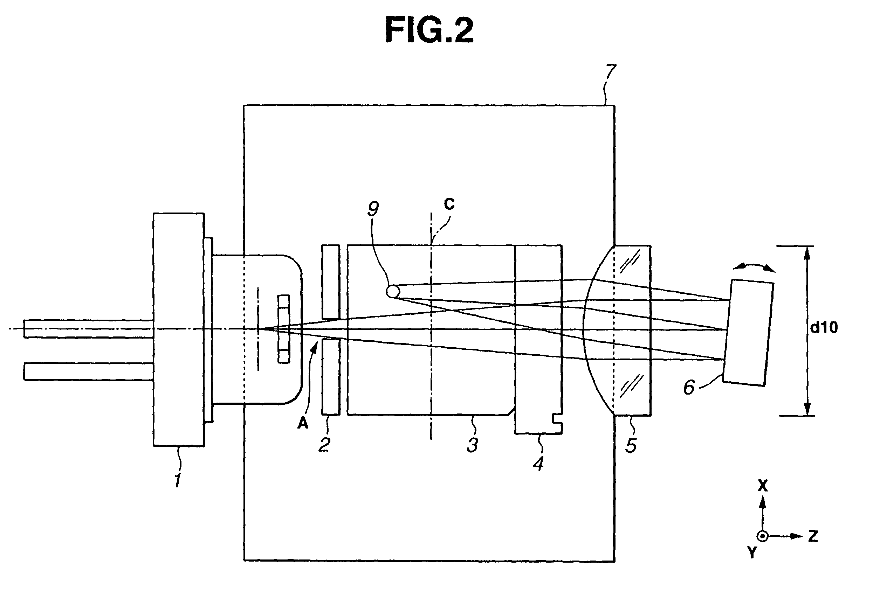

Figs. 1 to 7 show the first embodiment according to the present invention. Figs. 1 and 2 are views showing the overall configuration of a galvano-mirror tilt sensor, namely, a deflection angle detecting device. This embodiment is characterized by comprising an optical path switching means for an optical pickup, tracking detection means, and a galvano-mirror as optical switching means of optical fibers.

Fig. 1 is a plan view showing a galvano-mirror device according to the present embodiment, and Fig. 2 is a front view thereof. Referring to Fig. 1, a laser light A emitted from a light source module 1 such as a semiconductor laser is reduced in the beam diameter by an aperture member 2, and passes through a beam splitter 3, a 1/4 wavelength plate 4, and a condenser lens 5. Then, the laser light A is applied to the back surface of a galvano-mirror 6, which is a movable portion, and is reflected therefrom. The galvano-mirror 6 comprises a movable portion having a mirror, and a support shaft that supports the mirror. The mirror is arranged so as to be rotated about the support shaft by a support-driving port (not shown), and to be tilted in one direction or two directions.

The beam splitter 3 is a polarizing beam splitter formed by jointing two prisms, and the joint surface 3a thereof has thereon a coating having a P-polarization transmittance of approximately 100% and a S-polarization reflectance of approximately 100%. The polarized light of the laser light A is arranged to be P-polarized light with respect to the joint surface 3a. The polarized light passes through the beam splitter 3 with a transmittance of approximately 100%, and is made circularly polarized light by the 1/4 wavelength plate 4. The laser light A that has passed through the 1/4 wavelength plate 4, is made to be substantially parallel light by the condenser lens 5, and is made incident on the back surface of the galvano-mirror 6.

Here, that the laser light A made incident on the condenser lens 5 is substantially parallel light, means that the tilt angle of the mirror is in the range of -5 degrees to +5 degrees, and preferably, the range of -1 degree to +1 degree.

In the specification and the claims in the present application, the term "the back surface of the galvano-mirror or mirror" refers to the back surface of the mirror body plus the surface of the detecting mirror disposed at a position predetermined with respect to the above-described back surface of the mirror body. An example of the detecting mirror disposed at a position predetermined with respect to the back surface of the mirror, will be described later.

The laser light A reflected from the back surface the galvano- mirror 6 again passes through the condenser lens 5, and is made incident, as S-polarized light, on the joint surface 3a of the beam splitter 3 through the 1/4 wavelength plate 4. The laser light A made incident as a S-polarized light is arranged so that the optical path thereof is changed, on the joint surface 3a, so as to bend in the direction substantially perpendicular to the advancing optical path (optical path from the light source module 1 to the joint surface 3a), and is made incident on a photodetector 7. In other words, in the beam splitter 3, the laser light A changes the optical path of the reflected light from the galvano-mirror 6 so as to head toward the photodetector 7. At this time, the laser light A reflected from the galvano-mirror 6 is made to become condensed light by the condenser lens 5, and focuses on the vicinity of the photodetector 7, thereby forming a light spot with a diameter of approximately 0.2 mm, on the photodetector 7.

The photodetector 7 is a position sensitive detector (PSD) for detecting tilt amounts of the galvano-mirror 6 when tilting in X and Y directions, and detects the two-dimensional positions of a light spot on the photodetector 7. The tilt amount of the galvano-mirror 6 can be detected based on the output of the photodetector 7 having a function of performing angle detection in two-dimensional directions. The photodetector 7 is a two-dimensional position sensitive detector (PSD), such as the model S5990 having a light-receiving surface of 4 mm square and made by Hamamatsu Photonics Company. In this case, a light spot on the position sensitive detector (PSD) must be a spot having a diameter of 0.2 mm or more in order to maintain the detection accuracy thereof.

In the descriptions hereinafter, in Fig. 1, the direction in which an light spot produced by the laser light A reflected from the back surface of the galvano-mirror 6 moves on the photodetector 7, as the result of the rotation of the galvano-mirror 6 in the direction indicated by the arrow, is defined as X-direction. On the other hand, in Fig. 2, the direction in which the light spot 9 produced by the laser light A reflected from the back surface of the galvano-mirror 6 moves on the photodetector 7 in the direction indicated by the arrow, is defined as Y-direction.

The specific dimensions of the present embodiment are as follows: in Fig. 1, d1=3.2 mm, d2=0.2 mm, d3=4 mm, d4=1.1 mm, d5=0.5 mm, d6=1.6 mm, d7=1.8 mm, d8=4 mm, d9=0.2 mm, and the curvature radius (R) of the convex-side surface of the condenser lens 5 is 3.05 mm; and in Fig. 2, d10=4 mm.

While, in Fig. 1, all of the outer diameters of the aperture member 2, beam splitter 3, 1/4 wavelength plate 4, and condenser lens 5 agree with one another, it is desirable that the outer diameters of at least one set of two among them agree with each other. Making the outer diameters agree with each other allows at least the one set of two to be inserted along the inner peripheral surface of a common frame when assembling the device, thereby facilitating the manufacturing of the device.

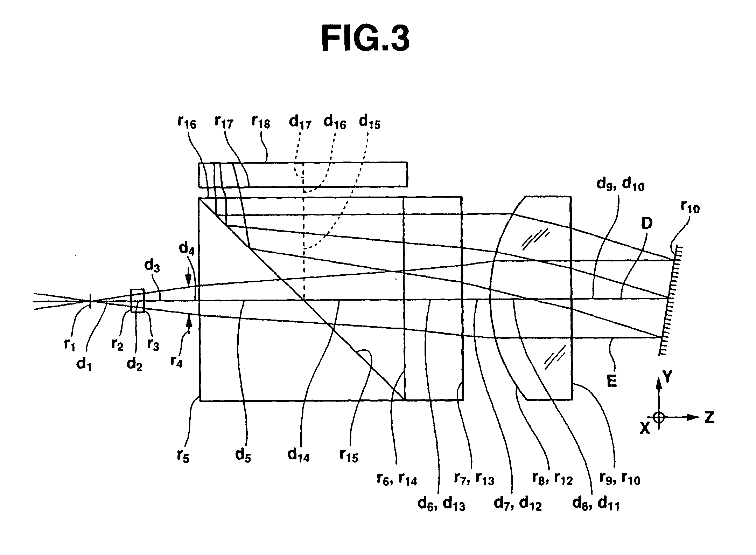

Fig. 3 is a view explaining an example of design data of the device in the first embodiment. Tables 1, 2, and 3 list the design data of the device illustrated in Fig. 3. Specifically, Table 1 shows a curvature radius, a distance between surfaces, an eccentricity, a refractive index, and an Abbe number with respect to each of the surfaces (represented by r-numbers) of optical components. Table 2 shows data of the eccentricity (1) in Table 1, while Table 3 shows data of the eccentricity (2) in Table 1.

**[TABLE 1]**

| SURFACE NUMBER | CURVATURE RADIUS | DISTANCE BETWEEN SURFACES | ECCENTRICITY | REFRACTIVE INDEX | ABBE NUMBER |
|---|---|---|---|---|---|
| $r_1 = \infty$ | | | | | |
| | | $d_1 = 0.78$ | | | |
| $r_2 = \infty$ | | | | | |
| | | $d_2 = 0.25$ | | $n_2 = 1.5163$ | $\nu_2 = 64.1$ |
| $r_3 = \infty$ | | | | | |
| | | $d_3 = 0.90$ | | | |
| $r_4$ APERTURE SURFACE (DIAMETER: 0.48) | | | | | |
| | | $d_4 = 0.20$ | | | |
| $r_5 = \infty$ | | | | | |
| | | $d_5 = 4.00$ | | $n_5 = 1.7847$ | $\nu_5 = 25.7$ |
| $r_6 = \infty$ | | | | | |
| | | $d_6 = 1.10$ | | $n_6 = 1.4533$ | $\nu_6 = 70.13$ |
| $r_7 = \infty$ | | | | | |
| | | $d_7 = 0.50$ | | | |
| $r_8 = 3.05$ | | | | | |
| | | $d_8 = 1.60$ | | $n_8 = 1.5163$ | $\nu_8 = 64.1$ |
| $r_9 = \infty$ | | | | | |
| | | $d_9 = 1.80$ | | | |
| $r_{10} = \infty$ | | | ECCENTRICITY (1) | | |
| | | $d_{10} = -1.80$ | | | |
| $r_{11}(r_9) = \infty$ | | | | | |
| | | $d_{11} = -1.60$ | | $n_{11} = 1.5163$ | $\nu_{11} = 64.1$ |
| $r_{12}(r_8) = 3.05$ | | | | | |
| | | $d_{12} = -0.50$ | | | |
| $r_{13}(r_7) = \infty$ | | | | | |
| | | $d_{13} = -1.10$ | | $n_{13} = 1.4533$ | $\nu_{13} = 70.13$ |
| $r_{14}(r_6) = \infty$ | | | | | |
| | | $d_{14} = -2.00$ | | $n_{14} = 1.7847$ | $\nu_{14} = 25.7$ |
| $r_{15} = \infty$ | | | ECCENTRICITY (2) | | |
| | | $d_{15} = 2.00$ | | $n_{15} = 1.7847$ | $\nu_{15} = 25.7$ |
| $r_{16} = \infty$ | | | | | |
| | | $d_{16} = 0.20$ | | | |
| $r_{17} = \infty$ | | | | | |
| | | $d_{17} = 0.46$ | | $n_{17} = 1.5839$ | $\nu_{17} = 30.2$ |
| $r_{18} = \infty$ | | | | | |

In Table 1, a surface number $r_1$ denotes the surface of a substance as a light source. A surface number $r_4$ denotes an aperture surface, which has a diameter of 0.48 cm. Surface numbers $r_8$ and $r_{12}$ denote a curved surface of the condenser lens 5, which has a curvature radius of 3.05. Since surfaces other than the surface with surface numbers $r_8$ and $r_{12}$ are planes, the curvature radii thereof are designated as infinities. The distance between surfaces is represented by $d_i$ (i is a positive integral; the same will apply to Table 1 and Table 4). Here, the $d_i$ indicates the distance between a surface $r_{(i+1)}$ and a surface $r_i$. Table 1 shows the distance data of each $d_i$.

The two surfaces represented by surface numbers $r_{10}$ and $r_{15}$ are reflecting surfaces. With respect to the surface $r_{15}$, light emitted from the light source passes therethrough without reflecting therefrom. However, reflected light from the surface $r_{10}$ reflects by the surface $r_{15}$. Therefore, with regard to the reflecting surface $r_{15}$ located between a surface $r_5$ and a surface $r_6$, the data of curvature radius and data of the distance between surfaces during light transmission are omitted.

As described above, Table 1 also shows the refractive indices and Abbe numbers of media between surfaces. The refractive index of a medium between surfaces is represented by $n_i$ (i is a positive integral; the same will be apply hereinafter), and the Abbe number is represented by $\nu_i$. In Table. 1, $n_i$ designates the refractive index of the medium between a surface $r_{(i+1)}$ and a surface $r_i$, and $\nu_i$ designates the Abbe number of the medium between a surface $r_{(i+1)}$ and a surface $r_i$. Since the refractive index of air is 1, the refractive index when a medium is air, is omitted in Table. 1.

The angle formed between the light beam that is made incident on the surface $r_{10}$ and that is on the optical axis parallel to the Z-axis, namely, an on-axis main light beam D, and the light beam that is made incident on the surface

7

$r_{10}$ and that is not parallel to the Z-axis, namely, an off-axis main light beam E, is +0.0796 degrees or -0.5483 degrees. Here, when the on-axis main light beam D and the off-axis main light beam E are parallel to each other, the degree formed therebetween is 0 degree.

Next, Tables 2 and 3 list the eccentric angle data of the surfaces $r_{10}$ and $r_{15}$, respectively.

[TABLE 2]

|   |       | ECCENTRICITY | (1)  |   |      |
|---|-------|--------------|------|---|------|
| X | 0.00  | Y            | 0.00 | Z | 0.00 |
| α | -9.10 | β            | 0.00 | γ | 0.00 |

[TABLE 3]

|   |       | ECCENTRICITY | (2)  |   |      |
|---|-------|--------------|------|---|------|
| X | 0.00  | Y            | 0.00 | Z | 0.00 |
| α | 45.00 | β            | 0.00 | γ | 0.00 |

In Tables 2 and 3, α designates the angle by which a surface rotates about the X-axis along the Y-Z plane, β designates the angle by which a surface rotates about the Y-axis along the X-Z plane, and γ designates the angle by which a surface rotates about the Z-axis along the X-Y plane. Each of the angle values shown in Tables 2 and 3 is defined as follows. In Fig. 3, when the sense of rotation is counterclockwise, the rotational angle takes on a positive value, and when the sense of rotation is clockwise, the rotational angle takes on a negative value. Tables 2 and 3 show that the angle α in the eccentricity (1) is -9.10 degrees and that in the eccentricity (2) is 45 degrees, respectively.

As the beam splitter 3, a glass material such as the model SFL11 having a high refractive index (n=1.76564) and made by SCHOTT Corporation, is used. Thereby, the overall length from the galvano-mirror 6 to the photodetector 7 becomes short, thereby allowing the focal length of the condenser lens 5 to be short. In addition to an effect of condensing the laser light A, the condenser lens 5 has an effect of reducing the moving amount of a light spot on the photodetector 7 with respect to the tilt of the galvano-mirror 6 by reducing the focal length and decreasing the angular magnification. This results in the realization of a wide range tilt sensor that is capable of detection up to a large tilt amount, or up to a large angle, of the galvano-mirror 6. In this embodiment, the condenser lens 5 is formed of a general-purpose glass material such as BK7, and has a focal length of approximately 6 mm. The angular magnification of the condenser lens 5 with respect to the back surface of the galvano-mirror 5 is approximately 0.5.

As shown in Figs. 1 and 2, the condenser lens 5 has a plano-convex shape with respect to the galvano-mirror 6. Thereby, it is possible to intentionally degrade aberration, and to enlarge a light spot 9 on the photodetector 7 with the focal length short.

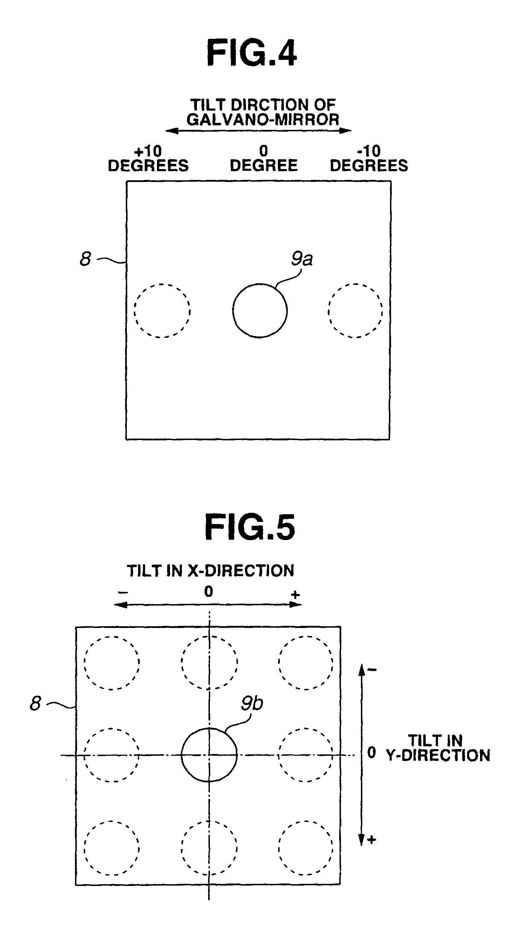

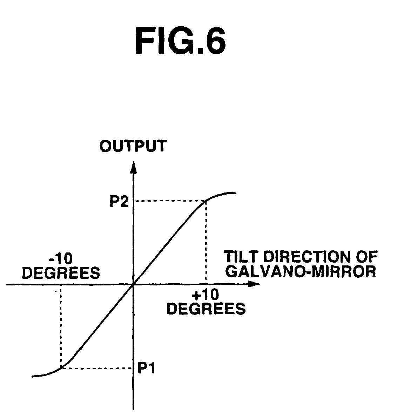

Figs. 4 to 6 are views specifically explaining the photodetector 7. Fig. 4 is a view explaining the movement of a light spot on the light-receiving surface 8 of a photodetector 7 when the galvano- mirror 6 tilts in a one-dimensional direction (X-direction or Y direction). Fig. 6 is a view showing an output state of the photodetector 7 with respect to the tilt of the galvano-meter 6. When the galvano-mirror 6 tilts in a one-dimensional direction (X-direction or Y direction), the position of a light spot 9a on the light-receiving surface 8 of the photodetector 7 moves. As shown in Fig. 4, when the galvano-mirror 6 is located at the neutral position, the central position of the light spot 9a is located on the center of the light-receiving surface 8. When the galvano-mirror 6 tilts in one-dimensional direction, the light spot moves to the positions as shown by dotted circles in Fig. 4.

At this time, as shown in Fig. 6, the output of the photodetector 7 substantially linearly change in a certain range. For example, the output value becomes P2 when the galvano-mirror 6 tilts by +10 degrees, while the output value becomes P1 when the galvano-mirror 6 tilts by -10 degrees.

Fig. 5 is a view explaining the movement of a light spot on the light-receiving surface 8 of a photodetector 7 when the galvano-mirror 6 tilts in two-dimensional directions (X-direction and Y-direction). When the galvano-mirror 6 tilts in the two-dimensional directions (X-direction and Y-direction), a light spot 9b on the light-receiving surface 8 of a photodetector 7 moves in the two-dimensional directions. As shown in Fig. 5, when the galvano-mirror 6 is located at the neutral position in the X-direction and Y-direction, the central position of the light spot 9b is located on the center of the light-receiving surface 8. When the galvano-mirror 6 tilts in the two-dimensional directions, the light spot moves to the positions as shown by dotted circles in Fig. 5. At this time, photodetector 7 outputs output values according to the respective corresponding tilt amounts in the x-direction and Y-direction.

As shown in Fig. 6, in the galvano-mirror device according to the present embodiment, the tilt amount, or the angle, of the galvano-mirror 6 is detectable over a range of +10 degrees to -10 degrees.

As glass materials for the beam splitter 3, when the refractive index thereof is in the range of 1.65 to 1.8, the model S-TIM22 (refractive index n=1.64769) made by OHARA Corporation, the model SFL11 (n=1.78472) made by SCHOTT Corporation, the model S-TIH11 (n=1.78472) made by OHARA Corporation, and the model S-TIH6 (n=1.80518) made by OHARA Corporation can also be used, beside the above-described model SFL11 (n=1.76564) made by SCHOTT Corporation.

Next, an example using a detecting mirror will be described.

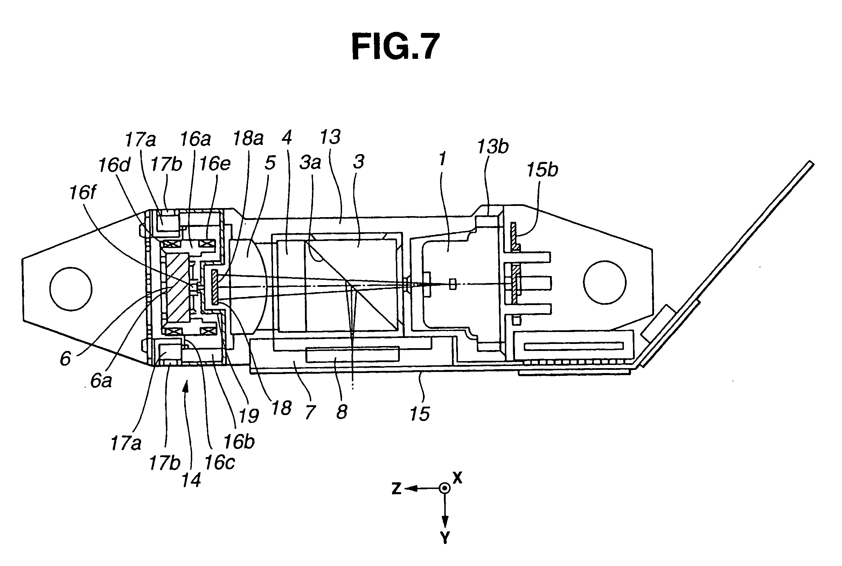

As described above, in the present invention, the term "the back surface of the galvano-mirror" refers to the back surface of the mirror body plus the surface of the detecting mirror disposed at a position predetermined with respect to the above-described back surface of the mirror body. Fig. 7 is a view showing the configuration of a mirror deflection angle detecting device having the detecting mirror disposed at a position predetermined with respect to the back surface of the mirror body.

In Fig. 7, the deflection angle detecting device comprises a light deflector 14 having a mirror 6, a flexible printed circuit board (FPC) 15, a housing 13, a semiconductor laser 1, a polarizing beam splitter (PBS) 3, a 1/4 wavelength plate 4, a condenser lens 5, and a position sensitive detector (PSD) 7.

The semiconductor laser 1 is installed at an opening portion 13b of a housing 13. One surface of the PBS 3 is adhered to the pedestal of the housing 13. The condenser lens 5 is affixed to an opening portion formed at the installation surface of the light deflector 14. The PSD 7 is adhered to the housing 13.

The light deflector 14 includes a coil holder 16a, which is a movable portion, and a magnet holder 16b, which is a fixed portion. The coil holder 16a and the magnet holder 16b are molded of a nonconductive plastic, such as liquid crystal polymer containing titanate whiskers. Four springs 16c as support members hold the coil holder 16a and the magnet holder 16b at both ends thereof. The coil holder 16a, which is a movable portion, includes a mirror 6, a first coil 16d, and a second coil 16e. The first and second coils 16d and 16e are supplied with a power from the FPC 15. Three terminals of the semiconductor laser 1 is soldered to the soldering portion 15b of the FPC 15.

A magnet 17a for the first coil 16d and a magnet (not shown) for the second coil 16e are affixed to the magnet holder 16b. A yoke 17b is adhered to the magnets.

The mirror 6 is affixed to an installation portion (not shown) at the surface-side central portion of the coil holder 16a by positioning the outer periphery portion thereof and securely adhering it. The reflecting surface 6a of mirror 6 on the surface side is covered with a coating having a high refractive index. Also, a mirror 18 is affixed to an installation portion (not shown) at the back surface-side central portion of the coil holder 16a by positioning the outer periphery portion thereof and securely adhering it. The mirror 18 as a detecting mirror is disposed at a predetermined position with respect to the mirror 6. In the space between the mirror 6 and the mirror 18, the central portion of an arm 19 as a support member is located. The two mirrors 6 and 18, therefore, are held in the movable portion so as to oppose to each other. The movable portion is supported at a pivot 16f so as to be tiltable with respect to the fixed portion.

Light from the semiconductor laser 1 is made incident on the PBS 3 as P-polarized light, passes through the polarization surface 3a thereof, and is made incident on the back surface (reflecting surface) 18a of the mirror 18 as detecting mirror, via the 1/4 wavelength plate 4 and the condenser lens 5. The light reflected from the mirror 18 is made incident on the PBS 3 through the condenser lens 5 and the 1/4 wavelength plate 4. Since this light that is made incident on the PBS 3 after being reflected from the mirror 18 passes through the 1/4 wavelength plate 4 twice in total by the round trip, the polarization surface rotates by 90 degrees and becomes S-polarized light. As a result, the S-polarized light is reflected by the polarization surface 3a of the PBS 3 and is made incident on the light-receiving surface 8 of the PSD 7. The PSD 7 outputs, as current values, the positions in two directions of the light applied to the light-receiving surface 8.

On the light-receiving surface 8, a light spot is formed at a position corresponding to the tilt of the mirror 18, and hence, that of the mirror 6, thereby allowing a tilt, that is, a deflection angle, of the mirror 6, to be detected.

The mirror deflection angle detecting device having a detecting mirror disposed at a position predetermined with respect to the back surface of the mirror body, as described with reference to Fig. 7, can be applied to any one of second to seventh embodiments, which will be described below. In the second to seventh embodiments, therefore, descriptions of the mirror deflection angle detecting device shown in Fig. 7 are omitted.

An example of a two-dimensional galvano-mirror utilizing an electrostatically driven motor that can be biaxially rotatable, is disclosed in Japanese Unexamined Patent Application Publication No. 5-60993. In the galvano-mirror set forth in this Japanese Unexamined Patent Application Publication No. 5-60993, as shown in Fig. 3 therein, a reflecting plate 28 and an inner frame 25, which are provided so that the centroid positions of two rotating shafts agree with each other, are supported by flexible beams 26 and 27 and flexible beams 23 and 24, respectively. When a voltage is applied to one of fixed electrodes 31 and 32 or one of fixed electrodes 33 and 34 that are provided under the reflecting plate 28 and inner frame 25, the reflecting plate 28 and inner frame 25 are rotated about the flexible beams 23, 24, 26, and 27 under electrostatic forces. Accordingly, such a galvano-mirror may also be used as a mirror in the present embodiment. Likewise, in any one of the second to seventh embodiments described below, such a galvano-mirror as set forth in this Japanese Unexamined Patent Application Publication No. 5-60993 may be employed as a mirror.

Therefore, the galvano-mirror device according to the present embodiment can be applied to any equipment that requires detection with respect to a wide range of tilt amounts of the galvano-mirror, such as optical path switching device for an optical pickup, a tracking detection device for an optical disk device, and an optical switching means of optical fibers. In the galvano-mirror device according to the present embodiment, since reflected light is bent in a direction perpendicular to the direction of the optical path of light emitted from the light source and is introduced into the photodetector, as well as a condenser lens is employed, the overall size of the galvano-mirror device becomes compact. Similarly, in an application device such as a tracking device for an optical disk device, a compact layout is possible, thereby allowing the overall size of the device to be compact.

Second Embodiment

Next, a second embodiment according to the present invention will be described with reference to the accompanying drawings.

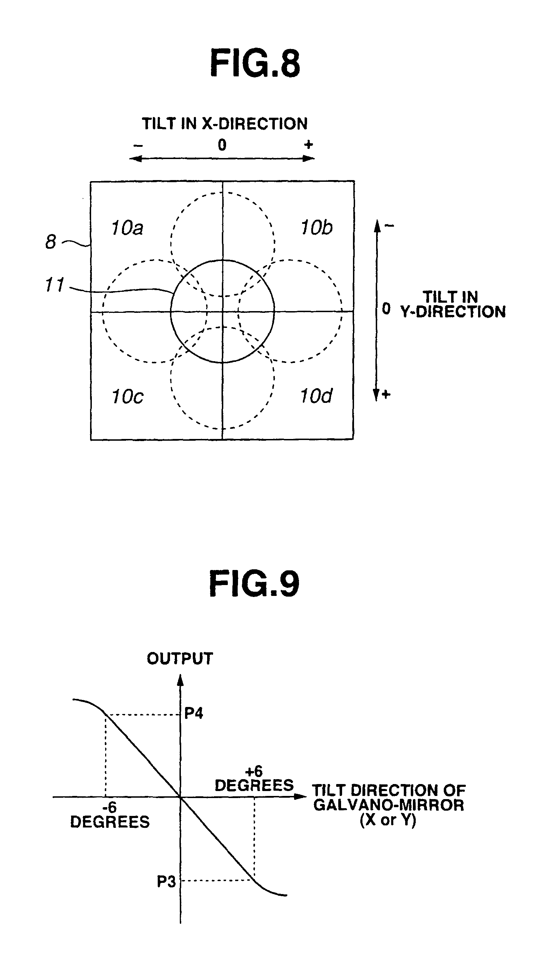

Fig. 8 is a view explaining the movement of a light spot on the light-receiving surface 8 of the photodetector 7 when the galvano-mirror 6 tilts in two-dimensional directions (X-direction and Y-direction) in a photodetector 7 as tilt sensor according to the second embodiment. Fig. 9 is a view showing an output state of the photodetector with respect to the tilt of the galvano-meter, in the configuration in Fig. 8.

The present embodiment is characterized by comprising a quadripartite photodetector (PD) instead of a position sensitive detector (PSD), as a tilt sensor photodetector.

The overall configuration of the galvano-mirror in this embodiment is the same as that of the first embodiment shown in Figs. 1 and 2, and only the photodetector is different from that of the first embodiment. The description of the present embodiment, therefore, will be made of only the portions different from those of the first embodiment.

In this embodiment, the focal length of the condenser lens 5 is approximately 9 mm, and the diameter of a light spot of the laser light A condensed on the photodetector 7 that has a function of detecting two-dimensional angles is as large as 1.0 to 1.5 mm. The light-receiving surface 10 of the photodetector 7 is divided into four light-receiving surfaces. The respective four divided light-receiving surfaces are designated as 10a, 10b, 10c, and 10d.

In Fig. 8, when the galvano-mirror tilts in the two-dimensional directions (X-direction and Y-direction), a light spot 11 on the light-receiving surface 10a moves in the two-dimensional directions. Here, when the outputs of the photodetector at the light-receiving surfaces 10a, 10b, 10c, and 10d, respectively, are designated as 12a, 12b, 12c, and 12d, the outputs in the X-direction and Y-direction are determined by the following expressions. the output in the X-direction:

$$(12a + 12c - 12b - 12d)/(12a + 12b + 12c + 12d)$$

the output in the Y-direction:

$$(12a + 12b - 12c - 12d)/(12a + 12b + 12c + 12d)$$

Thus, the obtained output in each of the X-direction and Y-direction substantially linearly changes according to the tilt amount of the galvano-mirror 6, as in the case of the first embodiment.

In the configuration in this embodiment, the size of the light-receiving surface is 4 mm square, and as shown in Fig. 9, the detection range with respect to the tilt of the galvano-mirror 6 is approximately between the range +5 to +6 degrees and the range -5 to -6 degrees, in each of the X-direction and Y-direction. For example, the output value becomes P4 when the galvano-mirror 6 tilts by -6 degrees, while the output value becomes P3 when the galvano-mirror 6 tilts by +6 degrees.

Therefore, according to the configuration of the second embodiment, as in the case of the first embodiment, a galvano-mirror device having a wide detection range and a compact size, can be implemented. Similarly, in an application device, a compact layout can be achieved, thereby allowing the overall size of device to be compact.

Third Embodiment

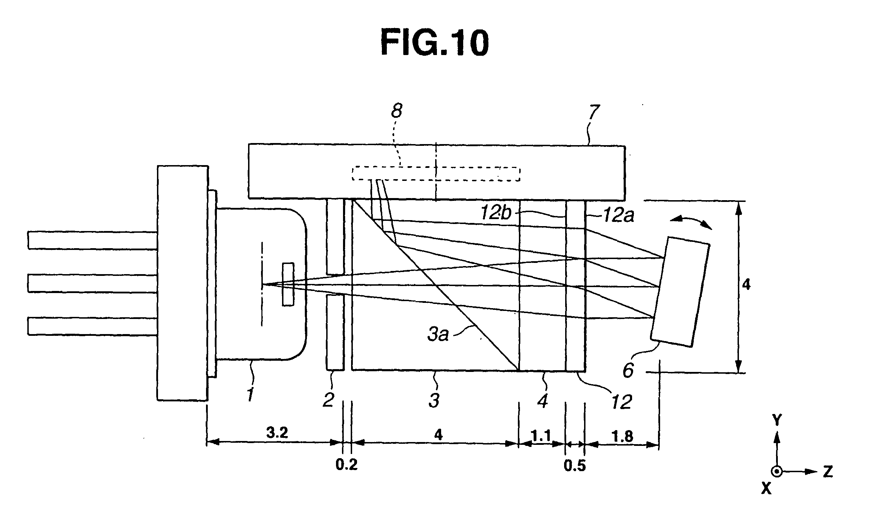

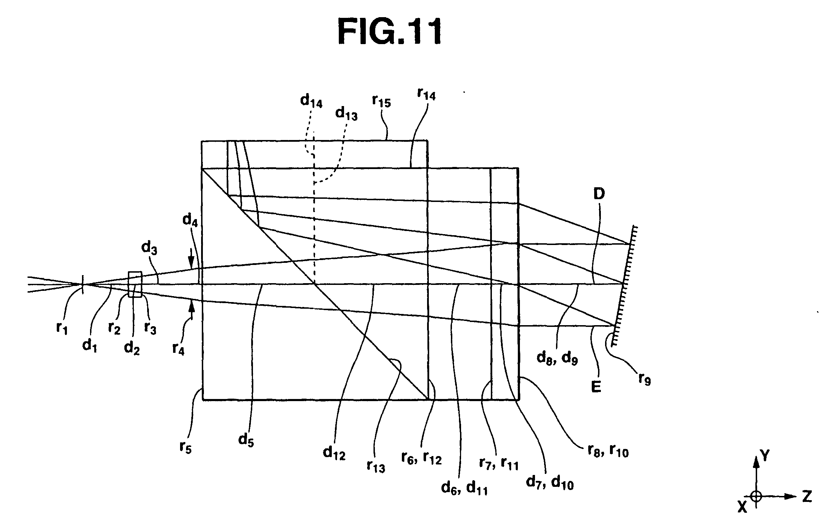

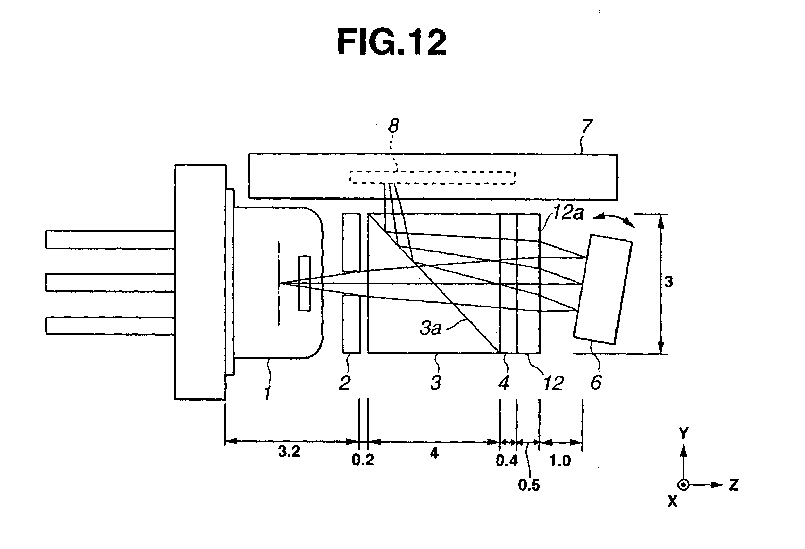

A third embodiment according to the present invention will be now described with reference to the drawings. Figs. 10 and 11 are views explaining a tilt sensor according to the present embodiment. Fig. 12 is a plan view showing another example of the galvano-mirror device according to the third embodiment. In these drawings, the same components as those in the first embodiment are designated by the same reference numerals, and explanations thereof are omitted. Descriptions are only made of portions that are different from those of the first embodiment.

Fig. 10 is a plan view showing the galvano-mirror device according to the present embodiment. Instead of using a plano-convex lens as a condenser lens for the tilt sensor, this embodiment is characterized by using a Fresnel lens having a zone plate, or a lens having a diffractive optical element (DOE) or a hologram.

In Fig. 10, reference numeral 12 denotes a Fresnel lens. In this embodiment, as a condenser lens, a Fresnel lens 12 with a thickness of approximately 0.5 mm is employed. The Fresnel lens 12 is joined to a 1/4 wavelength plate 4, and the beam splitter 3, the 1/4 wavelength plate 4, and the Fresnel lens 12 are integrally joined.

Fig. 10 shows the specific dimensions of the present embodiment. That is, d1=3.2 mm, d2=0.2 mm, d3=4 mm, d4=1.1 mm, and d8=4 mm; and the distance from the surface 12a of the Fresnel lens 12 to the surface of the galvano-mirror 6 is 1.8 mm.

Since the thickness of the Fresnel lens 12 and the distance between the 1/4 wavelength plate 4 and the Fresnel lens 12 become small as compared with the configuration of the first embodiment, the distance from the sensor light source 1 to the galvano-mirror 6 can be reduced by 1.6 mm, over the case of the first embodiment. This allows a compact configuration to be realized.

Simultaneously, since the distance from the Fresnel lens 12 to the photodetector 7 is also reduced, the focal length of the Fresnel lens 12 is as short as approximately 5 mm while that of the condenser lens 5 in the first embodiment is approximately 6 mm. For the Fresnel lens 12, a plastic glass material such as ZEONEX™ or an acrylic resin is used, and a zone plate is formed on the surface 12a of the Fresnel lens 12, using a glass material such as quartz.

Here, the "zone plate" refers to one that is formed by concentrically arranging a plurality of ring bands so that the light from all ring bands converges to a point in phase. Herein, the same refractive index as that of the lens is obtained by utilizing a deflection phenomenon due to a minute structure wherein transparent portions and absorptive portions are alternately formed.

By reducing the focal length of the Fresnel lens 12, the angular magnification can be reduced, and thereby the moving amount of a spot on the photodetector 7 with respect to the tilt of the galvano-mirror 6 becomes smaller. In this embodiment, the tilt amount of the galvano-mirror 6 is detectable in the range of -12 degrees to +12 degrees. Thereby, a tilt sensor having a wider detection range is implemented using the same photodetector.

Also, integrally joining the beam splitter 3, the 1/4 wavelength plate 4, and the Fresnel lens 12, eliminates the need for a fixing portion for the Fresnel lens 12. As a result, even the photodetector 7 can be integrally joined to the beam splitter 3 securely by pressing the photodetector 7 against the beam splitter 3, thereby facilitating the assembly and adjustment of the device.

Fig. 11 is a view explaining an example of design data of the device according to this embodiment. Lists 4, 5, and 6 show design data of the device in Fig. 11. Specifically, Table 4 shows a curvature radius, a distance between surfaces, an eccentricity, a refractive index, and an Abbe number with respect to each of the surfaces (represented by r-numbers) of optical components. Table 5 shows data of the eccentricity (1) in Table 4, while Table 6 shows data of the eccentricity (2) in Table 4. Here, the curvature radius R showing the surface shape of each of the hologram surfaces [1] in Table 4 is expressed by the following expression (1).

[TABLE 4]

| SURFACE NUMBER | CURVATURE RADIUS | DISTANCE BETWEEN SURFACES | ECCENTRICITY | REFRACTIVE INDEX | ABBE NUMBER |
|---|---|---|---|---|---|
| $r_1 = \infty$ | | | | | |
| | | $d_1 = 0.78$ | | | |
| $r_2 = \infty$ | | | | | |
| | | $d_2 = 0.25$ | | $n_2 = 1.5163$ | $\nu_2 = 64.1$ |
| $r_3 = \infty$ | | | | | |
| | | $d_3 = 0.90$ | | | |
| $r_4$ APERTURE SURFACE (DIAMETER: 0.48) | | | | | |
| | | $d_4 = 0.20$ | | | |
| $r_5 = \infty$ | | | | | |
| | | $d_5 = 4.00$ | | $n_5 = 1.7847$ | $\nu_5 = 25.7$ |
| $r_6 = \infty$ | | | | | |
| | | $d_6 = 1.10$ | | $n_6 = 1.4533$ | $\nu_6 = 70.13$ |

$$r_7 = \infty$$
$$d_7 = 0.50 \qquad n_7 = 1.5256 \qquad \nu_7 = 56.4$$
$$r_8 \text{ HOLOGRAM SURFACE [1]}$$
$$d_8 = 1.80$$
$$r_9 = \infty \qquad\qquad \text{ECCENTRICITY (1)}$$
$$d_9 = -1.80$$
$$r_{10}(r_8) \text{ HOLOGRAM SURFACE [1]}$$
$$d_{10} = -0.50 \qquad n_{10} = 1.5256 \qquad \nu_{10} = 56.4$$
$$r_{11}(r_7) = \infty$$
$$d_{11} = -1.10 \qquad n_{11} = 1.4533 \qquad \nu_{11} = 70.13$$
$$r_{12}(r_6) = \infty$$
$$d_{12} = -2.00 \qquad n_{12} = 1.7847 \qquad \nu_{12} = 25.7$$
$$r_{13} = \infty$$
$$d_{13} = 2.00 \qquad n_{13} = 1.7847 \qquad \nu_{13} = 25.7$$
$$r_{14} = \infty \qquad\qquad \text{ECCENTRICITY (2)}$$
$$d_{14} = 0.46 \qquad n_{14} = 1.5839 \qquad \nu_{14} = 30.2$$
$$r_{15} = \infty$$

In Table 4, a surface number $r_1$ denotes the surface of a substance as a light source. A surface number $r_4$ denotes an aperture surface, which has a diameter of 0.48 cm. Surface numbers $r_8$ and $r_{10}$ denote a hologram surface [1]. Since surfaces other than the surface with surface numbers $r_8$ and $r_{10}$ are planes, the curvature radii thereof are designated as infinities. The distance between surfaces is represented by $d_i$. Here, the $d_i$ indicates the distance between a surface $r_{(i+1)}$ and a surface $r_i$. Table 4 shows distance data of each $d_i$.

The two surfaces represented by surface numbers $r_9$ and $r_{13}$ are reflecting surfaces. With respect to the surface $r_{13}$, the light emitted from the light source pass therethrough without reflecting therefrom. However, the reflected light from the surface $r_9$ reflects from the surface $r_{13}$. Therefore, with regard to the reflecting surface $r_{13}$ located between a surface $r_5$ and a surface $r_6$, the data of curvature radius and data of the distance between surfaces during light transmission are omitted.

Table 4 also shows the refractive indices and Abbe numbers of media between surfaces. The refractive index of a medium between surfaces is represented by $n_i$, and the Abbe number is represented by $\nu_i$. In Table. 4, $n_i$ designates the refractive index of the medium between the surface $r_{(i+1)}$ and the surface $r_i$, and $\nu_i$ designates the Abbe number of the medium between a surface $r_{(i+1)}$ and a surface $r_i$. Since the refractive index of air is 1, the refractive index when a medium is air, is omitted in Table. 1.

The angle formed between the light beam that is made incident on the surface $r_9$ and that is on the optical axis parallel to the Z-axis, namely, an on-axis main light beam D, and the light beam that is made incident on the surface $r_9$ and that is not parallel to the Z-axis, namely, an off-axis main light beam E, is +0.0796 degrees or -0.5483 degrees. Here, when the on-axis main light beam D and the off-axis main light beam E are parallel to each other, the degree formed therebetween is 0 degree.

Next, Tables 5 and 6 list the eccentric angle data of the surfaces $r_9$ and $r_{13}$, respectively.

[TABLE 5]

| ECCENTRICITY (1) | | | | | |
|---|---|---|---|---|---|
| X | 0.00 | Y | 0.00 | Z | 0.00 |
| $\alpha$ | -10.00 | $\beta$ | 0.00 | $\gamma$ | 0.00 |

[TABLE 6]

| ECCENTRICITY (2) | | | | | |
|---|---|---|---|---|---|
| X | 0.00 | Y | 0.00 | Z | 0.00 |
| $\alpha$ | 45.00 | $\beta$ | 0.00 | $\gamma$ | 0.00 |

In Tables 5 and 6, $\alpha$ designates the angle by which a surface rotate about the X-axis along the Y-Z plane, $\beta$ designates the angle by which a surface rotate about the Y-axis along the X-Z plane, and $\gamma$ designates the angle by which a surface rotate about the Z-axis along the X-Y plane. Each of the angle values shown in Tables 5 and 6 are defined as follows. In Fig. 11, when the sense of rotation is counterclockwise, the rotational angle takes on a positive value, and when the sense of rotation is clockwise, the rotational angle takes on a negative value. Tables 5 and 6 show that the angle $\alpha$ in the eccentricity (1) is -10.00 degrees and that in the eccentricity (2) is 45 degrees, respectively.

[Mathematical Expression 1]

$$R = C_1 X + C_1 Y$$

where $C_1 = -9.9 \times 10^{-2}$

Fig. 12 is a plan view showing an example of another layout of galvano-mirror device according to the present embodiment, which is made more compact in size.

Fig. 12 shows the specific dimensions of the present embodiment. That is, d1=3.2 mm, d2=0.2 mm, d3=4 mm, d4=0.4 mm, and d8=3 mm; the thickness of the Fresnel lens 12 is 0.5 mm, and the distance from the surface 12a of the Fresnel lens 12 to the surface of the galvano-mirror 6 is 1.0 mm.

As shown in Fig. 12, as the 1/4 wavelength plate 4, a thin type with a thickness of 0.4 mm is used, and the beam splitter 3 is not 4 mm square, but 3 mm square. The distance between the Fresnel lens 12 and the galvano-mirror 6 is reduced to approximately 1 mm. Thereby, the distance from the sensor light source 1 to the galvano-mirror 6 can be shorten by 1,5 mm, and also the length of the device in the X-direction can be shortened by approximately 1.5 mm, over the case shown in Fig. 10.

In this embodiment, the focal length of the Fresnel lens 12 is approximately 4 mm, and the tilt amount of the galvano-mirror 6 is detectable in the range of -10 degrees to +10 degrees. The sensor light source 1 is of a package type with a diameter of 5.6 mm in Fig. 12. It is possible, however, to realize a more compact layout by using a package with a diameter of 3.3 mm. The dimensions of the light-receiving surface can also be reduced to 3 mm square.

Instead of using the Fresnel lens 12, a diffractive optical element (DOE) lens having a DOE, or a hologram lens having a hologram may be used. In this case, a deflection grating or a hologram is respectively provided instead of a zone plate, resulting in the same configuration example as those in Figs. 10 and 12. Thus, a similar effect to the device example with a configuration using a Fresnel lens is obtained.

The condenser lens in this embodiment can have a focal length approximately in the range of 1.5 to 7 mm.

With these arrangements, as in the case of the first embodiment, a galvano-mirror device that has a wide detecting range with respect to the tilt of the galvano-mirror and that is compact in size, can be achieved.

Fourth Embodiment

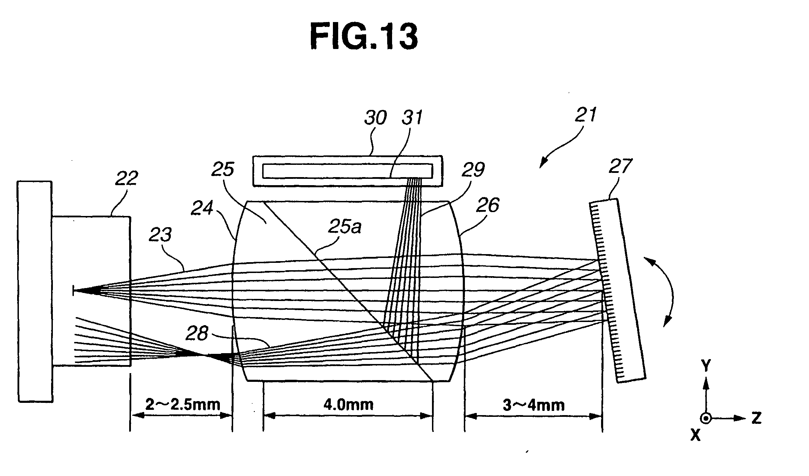

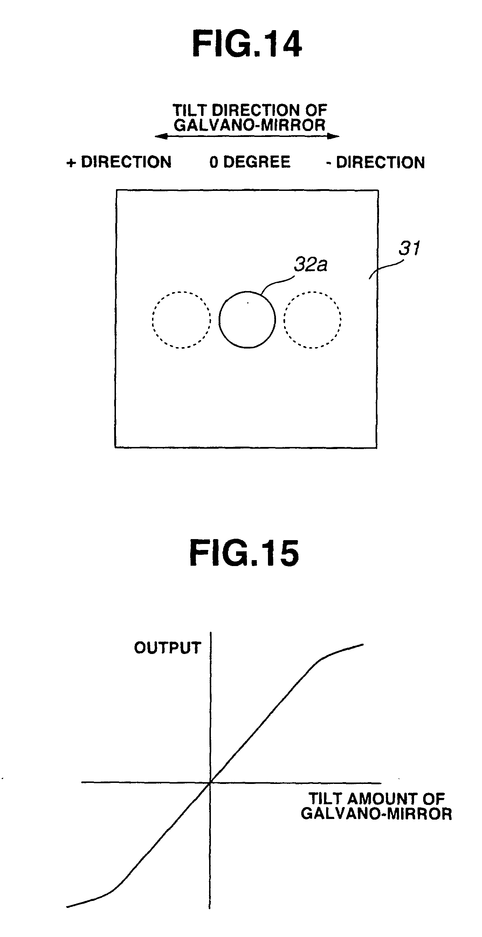

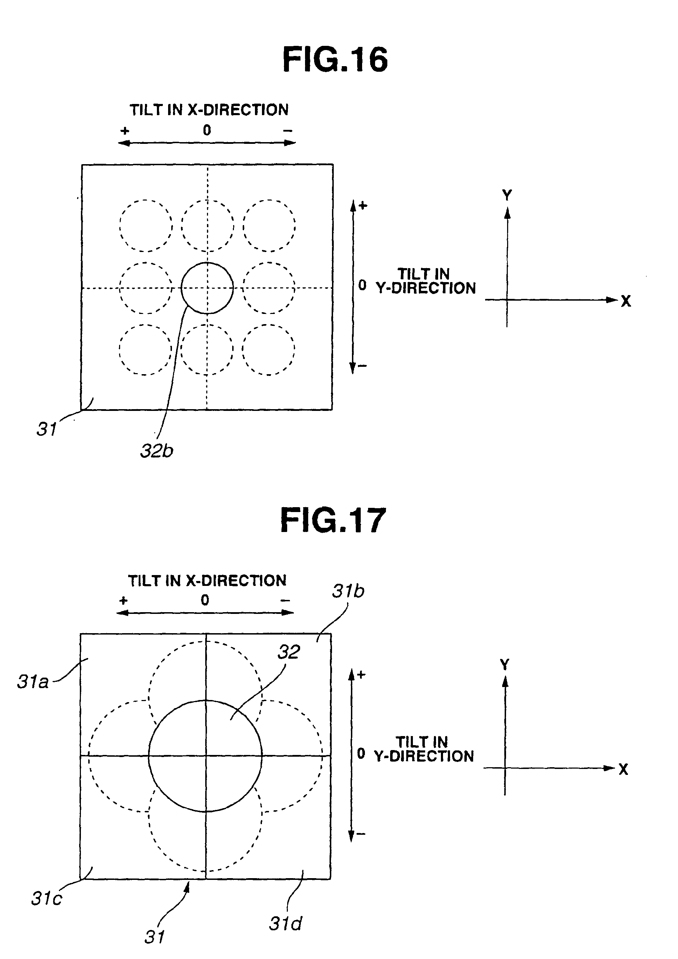

Figs. 13 to 16 are views showing a fourth embodiment according to the present invention. Fig. 13 is a plan view showing the overall configuration of a tilt sensor according to the present embodiment. Fig. 14 is a view explaining the movement of a light spot on the light-receiving surface of the photodetector when the galvano-mirror tilts in a one-dimensional direction (X-direction or Y direction). Fig. 15 is a view showing an output state of the photodetector with respect to the tilt of the galvano-meter. Fig. 16 is a view explaining the movement of a light spot on the light-receiving surface of the photodetector when the galvano-mirror tilts in two-dimensional directions (X-direction and Y-direction).

In a tilt sensor device 21 in this embodiment shown in Fig. 13, laser light 23 emitted from a sensor light source 22 is made substantially parallel light by a first condenser lens 24, and passes through a prism 25.

Here, the prism 25 is a beam splitter that is formed by using, as a glass material, a general-purpose glass material such as the model S-BSL7 made by OHARA Company, and the surface 25a of the prism 25 is covered with a coating having a transmittance of approximately 50% and a refractive index of approximately 50%.

The laser light 23 passes trough the prism 25 with a transmittance of approximately 50%, and after being slightly condensed through second condenser lens 26, the laser light 23 is reflected from the back surface of a galvano-mirror 27. The reflected laser light 23 again passes through the second condenser lens 26, and is separated at the surface 25a of the prism 25 into transmitted light 28 and reflected light 29.

The reflected light 29 is arranged so that the optical path thereof is changed, on the surface 25a, so as to bend in the direction substantially perpendicular to the advancing optical path, and is made incident on a photodetector 30. At this time, the reflected light 29 is made condensed light by the second condenser lens 26, and forms a spot with a diameter of approximately 0.2 to 0.5 mm on the photodetector 30.

In this embodiment, the two condenser lenses 24 and 26 are formed of the same glass material as that of the prism 25, and are joined to both surfaces of the prism 25. If there is a space more than adequate, a separated type configuration may also be adopted. The two condenser lenses 24 and 26 have substantially the same focal length, which is approximately 6 to 8 mm. Here, the prism as a beam splitter and the two condenser lenses may be integrally formed, or molded, into one piece member.

In case where only one condenser lens is provided, the lens aperture would have to be reduced in order to narrow the beam diameter of the laser light 23, thereby causing a light amount deficiency. Also, in case where some distances among portions due to the restriction on mechanical construction, the focal length of condenser lens would become long, so that the movement of a light spot on the photodetector 30 would become large, thereby inhibiting a wide range detection with respect to the tilt of the galvano-mirror 27.

Accordingly, by using the two condenser lenses 24 and 26, the tilt sensor device 21 according to the present embodiment can reduce the light amount deficiency of the laser light 23, thereby making effective use of the laser light. Also, even when there is a restriction on mechanical construction, it is possible to optimize the diameter of a spot and the moving amount thereof on the photodetector 30, by changing the focal length of the two condenser lenses 24 and 26. These allow a wide range detection with respect to the tilt of the galvano-mirror 27.

The photodetector 30 is a position sensitive detector (PSD) for detecting the tilt amount of the galvano-mirror 27 when tilting in X and Y directions, and detects the tilt amounts thereof by detecting the two-dimensional positions of a light spot on the photodetector 30.

In this embodiment, the photodetector 30 is a PSD, such as the model S5990 having a light-receiving surface of 4 mm square and made by Hamamatsu Photonics Company. However, any photodetector having the similar size to that of the model S5990 may be used without problems.

Figs. 14 and 15 are views explaining the details of the photodetector 30. Fig. 14 shows the movement of a light spot when the galvano-mirror 27 tilts in a one-dimensional direction (X-direction or Y direction). When the galvano-mirror 27 tilts in a one-dimensional direction, the position of a spot 32a on the light-receiving surface 31 of the photodetector 30 moves. At this time, the output of the photodetector 30 substantially linearly changes in a definite range, as shown in Fig. 15.

Fig. 16 shows the movement of a light spot when the galvano- mirror 27 tilts in two-dimensional directions. When the galvano-mirror 27 tilts in the X- and Y-directions, the position of a spot 32b on the light-receiving surface 31 of the photodetector 30 moves in the two-dimensional directions. At this time, the output in each of the directions becomes similar to that shown in Fig. 15.

According to the arrangement of the present embodiment, the detection range with respect to the tilt amount, that is, the tilt angle, of the galvano-mirror 27 is between the range -7 to -10 degrees and the range +7 to +10 degrees. This embodiment, therefore, can be used for an optical path switching means for an optical pickup, tracking detection means, and an optical switching means of optical fibers, which require a wide range detection with respect to the tilt of the galvano-mirror.

By using the two condenser lenses 24 and 26, the light amount deficiency of the laser light 23 can be reduced, and thereby the laser light can be effectively utilized. Even when there is a restriction on mechanical construction, it is possible to optimize the diameter of a spot and the moving amount thereof on the photodetector 30, by changing the focal length of the two condenser lenses 24 and 26. These allow a wide range detection with respect to the tilt of the galvano-mirror 27.

Moreover, since the reflected light 29 is introduced into the photodetector 30 while being bent, the tilt sensor 31 can be configured by a compact mechanical layout.

Fifth Embodiment

The details of a photodetector for a tilt sensor device according to a fifth embodiment of the present invention will be described with reference to Fig. 17. Fig. 17 is a view explaining the movement of a light spot on the light-receiving surface of the photodetector when the galvano-mirror tilts in two-dimensional directions (X-direction and Y-direction), in a galvano-mirror device according to the fifth embodiment.

Since the fifth embodiment is substantially the same as the fourth embodiment, only the portions different from those of the fourth embodiment will be described. The configuration of the tilt sensor according to the present embodiment is the same as that shown in Fig. 13.

This embodiment is characterized by comprising, as the photodetector 30 for the tilt sensor, a quadripartite photodetector (PD) having quadripartite light-receiving surfaces corresponding to quadripartite photodiodes adopted as a photodetector, instead of a position sensitive detector (PSD).

In this embodiment, the focal length of a second condenser lens 26 is approximately 10 to 12 mm, and the diameter of a light spot of the laser light A condensed on the photodetector 30 is as large as 1.0 to 1.5 mm. As shown in Fig. 17, the light-receiving surface 31 of the photodetector 30 is divided into four light-receiving surfaces 31a to 31d.

When the galvano-mirror 27 tilts in the two-dimensional directions (X-direction and Y-direction), a light spot 32 on the light-receiving surface 31 moves in the two-dimensional directions. Here, when the outputs of the light-receiving surfaces 31a to 31d, respectively, is designated as A to D, the outputs in the X-direction and Y-direction are determined by the following expressions.
the output in the X-direction:

$$(A + C - B - D)/(A + B + C + D)$$

the output in the Y-direction:

$$(A + B - C - D)/(A + B + C + D)$$

Thus, the obtained output in each of the X-direction and Y-direction substantially linearly changes, as in the case of the fourth embodiment.

In the arrangement of this embodiment, the size of the light-receiving surface 31 is 4 mm square, and the detection range with respect to the tilt of the galvano-mirror 27 is approximately between the range -5 to -6 degrees and the range +5 to +6 degrees.

Therefore, as in the case of the fourth embodiment, this arrangement can be used for a wide range detection with respect to the tilt of galvano-mirror by a compact mechanical layout.

Sixth Embodiment

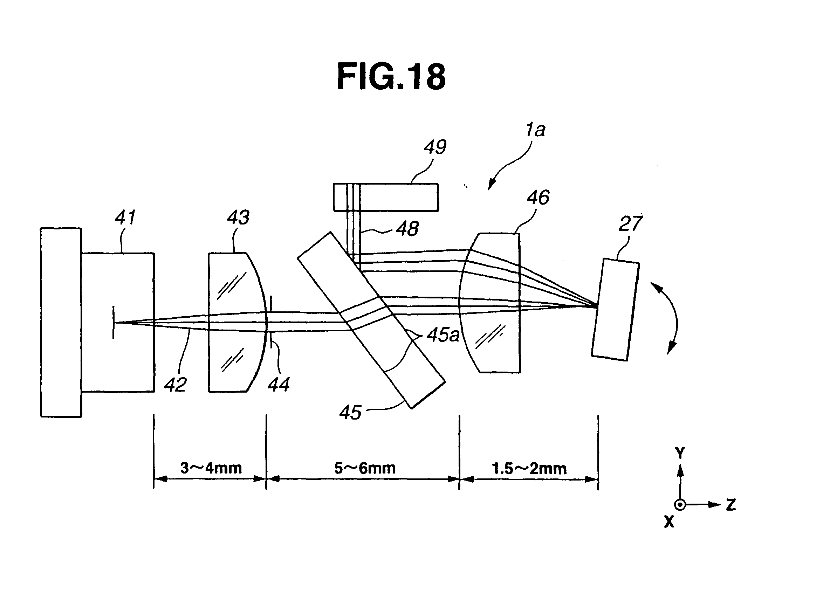

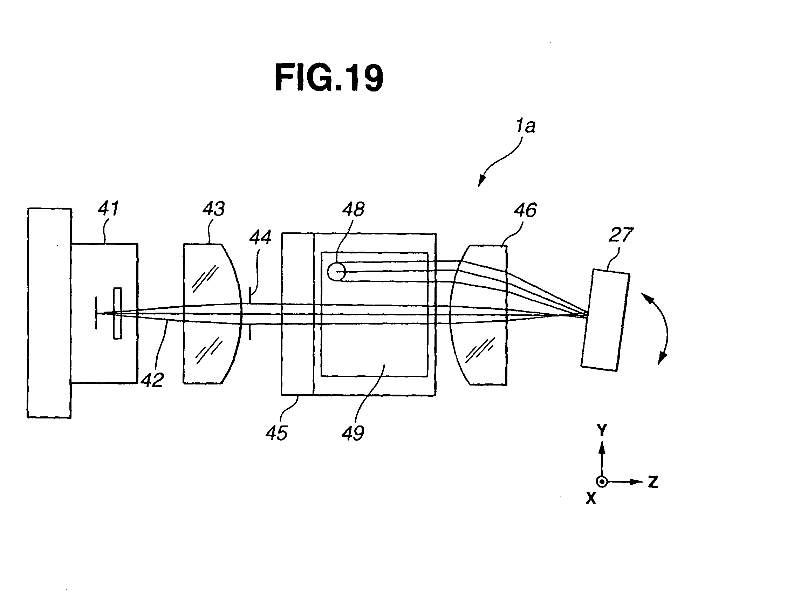

Figs. 18 and 19 are views showing a sixth embodiment according to the present invention. Fig. 18 is a plan view showing a galvano-mirror device according to the sixth embodiment, and Fig. 19 is a front view thereof.

Since the sixth embodiment is substantially the same as the fourth embodiment, descriptions are only made of portions thereof that are different from those of the fourth embodiment. The same components as those in the fourth embodiment are designated by the same reference numerals, and explanations thereof are omitted.

This embodiment is characterized by using a flat plate instead of a prism, as a beam splitter to change the optical path.

In the tilt sensor 1a of the present embodiment shown in Figs. 18 and 19, the laser light 42 emitted from the sensor light source 41 is made substantially parallel light by a first condenser lens 43, the beam diameter thereof is reduced by the aperture 44, and the laser light is made incident on a flat plate 45.

Here, the flat plate 45 is a beam splitter that is formed by using, glass material, a glass such as the model S-BSL7 made by OHARA Company and white board, and a plastic such as ZEONEX™. The surface 45a of the flat plate 45 is covered with a coating having a transmittance of approximately 50% and a refractive index of approximately 50%.

The laser light 42 passes trough the flat plate 45 with a transmittance of approximately 50%, and is condensed on the vicinity of the back surface of the galvano-mirror 27, by a second condenser lens 46. At this time, a condensing point is located approximately 0.3 to 0.5 mm before the galvano-mirror 27, in order to prevent a light amount deficiency caused by dusts on the surface of the galvano-mirror 27.

The laser light 42 reflected from the back surface of the galvano-mirror 27, again passes through the second condenser lens 46, and after being made substantially parallel light, the laser light 42 is reflected from the surface 45a of the flat plate 45, as reflected light 48 separated from the substantially parallel light.

The reflected light 48 is arranged so that the optical path thereof is changed, on the surface 45a, so as to bend in the direction substantially perpendicular to the advancing optical path, and is made incident on a photodetector 49, thereby forming a spot with a diameter of approximately 0.2 mm on the photodetector 49.

The two condenser lens 43 and 46 are the same type of aspherical lens having a focal length of approximately 2 mm, and wavefront aberrations thereof are in the range of 0.01 to 0.05 λrms in RMS values. Here, the RMS value of the wavefront aberration is the root mean square value of a P-V value, which is a peak-to-valley value, of a wavefront aberration. The unit of wavefront aberration is λ, which is a wavelength of light.

As in the case of the fourth embodiment, the photodetector 49 is a PSD, such as the model S7848 having a light-receiving surface of 2 mm square and made by Hamamatsu Photonics Company. However, any photodetector having the similar size to that of the model S7848 may be used without problems.

Using the two condenser lenses 43 and 46 allows the laser light 42 to become substantially parallel light and to be reduced in the beam diameter without causing a light amount deficiency, and enables the laser light 42 to be detected with respect to wide range tilt of the galvano-mirror 27, without causing vignetting outside effective ranges on portions. Also, making the laser light substantially parallel light allows the limitation to the distance between portions to be reduced.

With these arrangements, as in the case of the fourth embodiment, tilt amounts of the galvano-mirror 7 can be detected, and also, by using the flat plate 45, a more inexpensive and compact mechanical layout can be implemented.

Seventh Embodiment

A seventh embodiment according to the present invention is characterized by comprising, as first and second condenser lens, Fresnel lenses, DOE lenses having a deflecting optical element or a diffraction grating, or hologram lenses, instead of ordinary spherical lenses.

Since the configuration of the seventh embodiment according to the present invention is substantially the same as those of the fourth to sixth embodiments, descriptions are only made of portions thereof that are different from those of the fourth to sixth embodiments. The configuration of the tilt sensor according to this embodiment is the same as those shown in Figs. 13 to 19.

With respect to both or one of the first and second lenses of each of the fourth to sixth embodiments, Fresnel lenses, DOE lenses, or hologram lenses that have the same focal length as that of the first and second condenser lenses of the fourth to sixth embodiments, are used. Thereby, similar effects to those of ordinary lenses can be achieved.

Since the above-described lens can provide a thin optical component having a thickness of below 1 mm, over the condenser lenses in the first to second embodiments, the above-described lens enables the device to become more compact configuration. Furthermore, in the case of a hologram lens, by directly applying a hologram on each of the surfaces of the bean splitter, it is possible to unify the beam splitter and the first and second condenser lenses into one component. This allows the number of components to be reduced, and enables a galvano-mirror deflection angle detecting device having a layout that is even more compact and inexpensive to be achieved.

Application Examples

The galvano-mirror device equipped with the mirror deflection angle detecting device according to the above-described embodiments can be applied to an optical signal switching system, which performs the switching of an optical path, an optical disk, and the like. Some of these application examples will be described below.

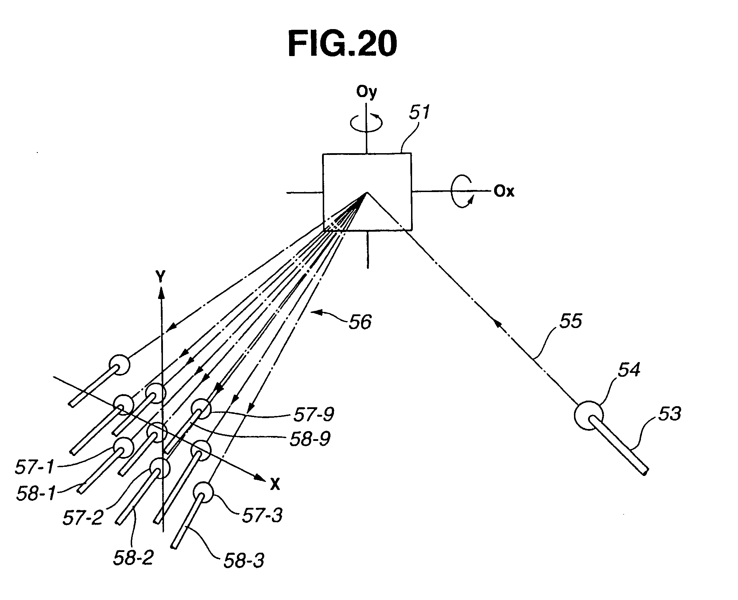

First, reference is made to an application example with respect to an optical signal switching system, of the mirror deflection angle detecting device according to the above-described embodiments. Fig. 20 is a view explaining the configuration of an optical signal switching system. In Fig. 20, a mirror 51 as a light deflecting element is selectively driven about a rotating shaft Ox parallel to the X-axis and a rotating axis oy parallel to the Y-axis perpendicular to the X-axis.

An optical signal is transmitted through the inside of an optical fiber 53 as an input cable. The incident light 55 for optical communication that is emitted as parallel light from one optical fiber 53 through a lens 54, is reflected by a mirror 51. The reflected light 56 is selectively made incident on one of nine lenses in total 57-1 to 57-9, which are arranged on three-stage planes substantially perpendicular to the reflected light 56, and is arranged to be made condensedly incident on either one of respective corresponding nine optical fibers 58-1 to 58-9.

The optical signal is received by either one of the optical fibers 58-1 to 58-9 as output cables, and is transmitted through the inside of the fiber. Although a single input fiber is used here, a plurality of fibers may be used to constitute an input fiber unit, as in the case of the plurality of output fibers.

The reflected light 56 from the mirror 51 is deflected in the X-direction, (i.e., the horizontal direction in Fig. 20) by tilting the mirror 51 about the rotating shaft Oy, while the reflected light 56 from the mirror 51 is deflected in the Y-direction, (i.e., the vertical direction in Fig. 20) by tilting the mirror 51 about the rotating shaft Ox. Thereby, the optical path of the optical signal from the input fiber is selectively changed, and the reflected light 56 is made incident on either one of the nine lenses 57-1 to 57-9. The light that has made incident on the lens 57 is made incident on either one of the respective corresponding optical fibers 58-1 to 58-9. In this manner, the optical fiber that outputs light from one optical fiber 53 on the input side, can be selected out of the nine optical fibers 58-1 to 58-9.

More specifically, when the place of the input fiber from which an inputted optical signal is to be emitted is specified out of the plurality of input fibers, and the place of the output fiber to transmit the optical signal is specified out of the plurality of output fibers, a position detecting light is applied to the back surface of at least one mirror 51 disposed in the optical path between the input fiber and the out put fiber. At this time, by receiving, by a photodetector, the position detecting light reflected from the back surface of the mirror 51, the deflection amount of the tilt angle of the mirror is detected, and the tilt angle of the mirror 51 is adjusted.

Therefore, by equipping the mirror 51 in a galvano-mirror device as a light switching device with the above-described mirror deflection angle detecting device, an optical signal switching system can be implemented.

Next, reference is made to an application example with respect to an optical disk, of the mirror deflection angle detecting device according to the above-described embodiments.

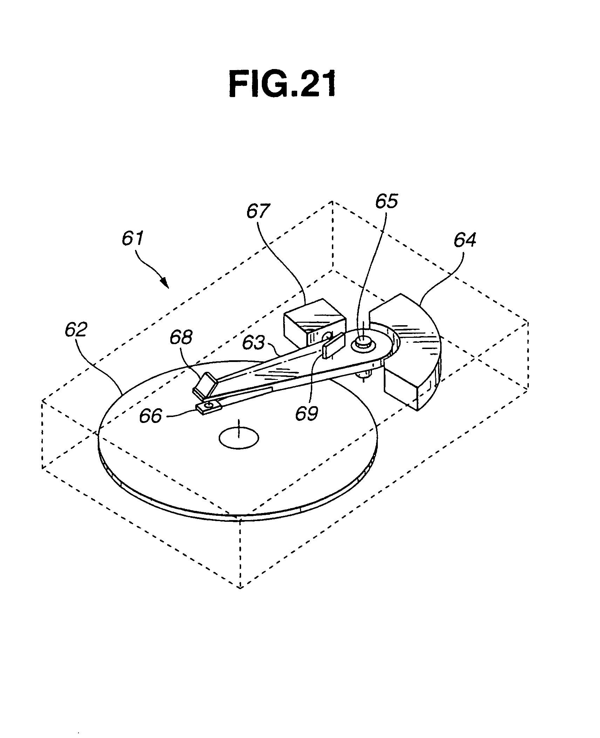

Fig. 21 is a view explaining the fundamental configuration of a magneto-optical disk. Referring to Fig. 21, in a magneto-optical disk driving device 61, an optical disk 62 is mounted on the rotating shaft of a spindle motor (not shown). In order to reproduce or record information in the optical disk, a pivoting arm (coarse motion arm) 63 is affixed so as to become parallel to recording surface of the optical disk 62. The pivoting arm 63 is arranged so as to be pivoted about a pivot 65 by a voice coil motor 4. A floating optical head 66 equipped with an optical element is mounted at the front end of the pivoting arm 63 opposite to the optical disk 62. In the vicinity of the pivot 65 of the pivoting arm 63, there is provided a light source module 67 including a light source unit and a light-receiving unit, and is actuated in conjunction with the pivoting arm 63.

The floating optical head 66 comprises a floating slider, an objective lens, a solid immersion lens, and a magnetic coil. A riser mirror 68 for introducing a laser flux into the floating optical head 66 is adhered to the front end of the pivoting arm 63. Also, a deflection mirror 69 is provided on the pivoting arm 63. The parallel laser flux emitted from the light source module 67 is converged on the optical disk 62 by the floating optical head 66. In addition, a Galvano-motor (not shown) is affixed to the deflection mirror 69, and is arranged so as to change the travelling direction of the laser flux by a minute angle.

Therefore, the present invention can be applied to a optical disk device by providing the above-described mirror deflection angle detecting device corresponding to the mirror 69.

The mirrors shown in the above-described plurality of embodiments and the application examples thereof has been explained as galvano-mirrors wherein a mirror is generally equipped with a driving coil. However, a mirror to which the present invention can be applied, is not limited to such a type of galvano-mirror. The present invention can also be applied to a mirror such that an electrostatic motor is used or that a permanent magnet is adhered to the mirror with a driving coil provided on a fixed portion.

While embodiments of the present invention have been described, it should be understood that the present invention is not limited to those embodiments and that various changes and modifications thereof can be made without departing from the spirit and scope of the present invention.

INDUSTRIAL APPLICABILITY

As described above, according to the present invention, there are provided a mirror angle detecting device having a wide detection range with respect to the tilt amount of mirror and capable of being formed into a compact size, an optical signal switching system, and an optical signal switching method.

**Claims**

**1.** A mirror angle detecting device, comprising:

>  a movable portion having at least a mirror;
>  a support drive portion that tilts the movable portion;
>  a light source that projects light onto the movable portion;
>  a beam splitter that changes the optical path of reflected light from the movable portion;
>  a photodetector that receives the reflected light from the movable portion, and that detects a tilt amount of the mirror; and
>  at least one condenser lens disposed between the photodetector and the movable portion.

**2.** The mirror angle detecting device according to claim 1, wherein the beam splitter is a prism that has functions of allowing light from the light source to pass therethrough, and switching the optical path of the reflected light from the movable portion.

**3.** The mirror angle detecting device according to claim 1, wherein the beam splitter is a flat plate that has functions of allowing light from the light source to pass therethrough, and switching the optical path of the reflected light from the movable portion.

**4.** The mirror angle detecting device according to claim 1, wherein the condenser lens is disposed between the beam splitter and the mirror, for condensing the reflected light on the photodetector.

**5.** The mirror angle detecting device according to claim 1, wherein the condenser lens changes light from the light source into substantially parallel light.

**6.** The mirror angle detecting device according to claim 1, wherein the condenser lens has a wavefront aberration of 0.01 λrms or more and 0.05 λrms or less, where × is a wavelength of light.

**7.** The mirror angle detecting device according to claim 1, wherein the photodetector is a two-dimensional position sensitive detector.

**8.** The mirror angle detecting device according to claim 1, wherein the photodetector is a PSD or a quadripartite photodiode.

**9.** The mirror angle detecting device according to claim 1, wherein the condenser lens is a Fresnel lens.

**10.** The mirror angle detecting device according to claim 1, wherein the condenser lens is a lens employing a diffractive optical element.

**11.** The mirror angle detecting device according to claim 1, wherein a diaphragm is provided between the light source and the beam splitter.

**12.** The mirror angle detecting device according to claim 1, wherein the condenser lens and the beam splitter are integrally formed.

**13.** An optical signal switching system, comprising:

an input cable unit having a plurality of input cables through the inside of each of which an optical signal is transmitted;
an output cable unit having a plurality of output cables each of which receives the optical signal transmitted from the input cable unit, and each of which allows the optical signal to be transmitted through the inside thereof; and
an optical signal switching device that is disposed between the input cable unit and the output cable unit, and that causes one of the plurality of output cables to selectively transmit an optical signal inputted from at least one of the plurality of input cables,

wherein the optical signal switching device at least comprises a mirror that is configured so that the tilt angle thereof can be deflected in order to selectively change the optical path of the optical signal emitted from the input cable, and a deflection angle detecting device that detects the deflection angle of the mirror, and
wherein the deflection angle detecting device comprises a light source that projects detection light onto the rear surface of the mirror, and a photodetector that receives detection light reflected by the mirror and that detects the amount of the deflection angle of the mirror.

**14.** The optical signal switching system according to claim 13, wherein a beam splitter is provided between the light source and the mirror.

**15.** The optical signal switching system according to claim 13, wherein the beam splitter is a prism that allows light heading from the light source toward the mirror to pass therethrough, and that switches the optical path so that the reflected light from the mirror reflects onto the optical path side connected to the photodetector.

**16.** The optical signal switching system according to claim 13, wherein the beam splitter is a flat plate that allows light heading from the light source toward the mirror to pass therethrough, and that switches the optical path so that the reflected light from the mirror reflects onto the optical path side connected to the photodetector.

**17.** The optical signal switching system according to claim 13, wherein a condenser lens is provided in the optical path of the optical signal switching system.

**18.** The optical signal switching system according to claim 17, wherein the condenser lens is disposed between the beam splitter and the mirror, for condensing the reflected light from the mirror on the photodetector.

**19.** The optical signal switching system according to claim 17, wherein the condenser lens renders light from the light source substantially parallel.

**20.** The optical signal switching system according to claim 17, wherein the condenser lens has a wavefront aberration of 0.01 λrms or more and 0.05 λrms or less, where λ is a wavelength of light.

**21.** The optical signal switching system according to claim 13, wherein the photodetector is a two-dimensional position sensitive detector.

**22.** The optical signal switching system according to claim 13, wherein the photodetector is a PSD or a quadripartite photodiode.

**23.** The optical signal switching system according to claim 17, wherein the condenser lens is a Fresnel lens.

**24.** The optical signal switching system according to claim 17, wherein the condenser lens is a lens employing a diffractive optical element.

**25.** The optical signal switching system according to claim 13, wherein the input cable comprises an optical fiber.

**26.** The optical signal switching system according to claim 13, wherein the output cable comprises an optical fiber.

**27.** The optical signal switching system according to claim 13, wherein the mirror comprises a galvano-mirror.

**28.** The optical signal switching system according to claim 13, wherein the input cable unit has a configuration in which the plurality of input cables are arranged in a matrix arrangement.

**29.** The optical signal switching system according to claim 13, wherein the output cable unit has a configuration in which the plurality of output cables are arranged in a matrix arrangement.

**30.** An optical signal switching method for causing an optical signal emitted from at least one of a plurality of input cables to be selectively transmitted to one of a plurality of output cables, the method comprising:

specifying the location of the input cable from which an inputted optical signal is to be emitted, out of the plurality of input cables, and specifying the location of the output cable to transmit the optical signal, out of the plurality of output cables;
applying a position detecting light beam to the rear surface of at least one mirror disposed in the optical path between the input cable and the output cable, and receiving, by an photodetector, the position detecting light beam reflected from the rear surface of the mirror, whereby the deflection amount of a tilt angle of the mirror is detected to adjust the tilt angle of the mirror; and
connecting the optical path of the specified input cable and that of the specified output cable by the mirror changed in the tilt angle, and causing the mirror to selectively transmit the optical signal.

**31.** The optical signal switching method according to claim 30, wherein the position detecting light beam is applied to the mirror through a beam splitter, and wherein the position detecting light beam reflected from the rear surface of the mirror is again introduced into the photodetector through the beam splitter.

**32.** The optical signal switching method according to claim 30, wherein the position detecting light beam reflected from the rear surface of the mirror is condensed on the photodetector through a condenser lens, and wherein the photodetector is caused to receive the position detecting light.

**33.** A mirror angle detecting device, comprising:

a light source that projects light onto a mirror that tilts in at least one-dimensional direction;
a photodetector that receives reflected light from the mirror, and that detects the position of the light spot of the reflected light;
a beam splitter that changes the optical path of the reflected light from the mirror so as to head toward the photodetector; and
a condenser lens disposed between the photodetector and the mirror.

**34.** The mirror angle detecting device according to claim 33, wherein the photodetector is a two-dimensional position detector with respect to the light spot.

**35.** The mirror angle detecting device according to claim 33, wherein the photodetector is a PSD or a quadripartite photodiode.

**36.** The mirror angle detecting device according to claim 33, wherein the condenser lens is a lens having a plano-convex shape with respect to the mirror.

**37.** A mirror angle detecting device, comprising:

a light source that projects light onto a movable portion having a mirror turnable about a support shaft;
a first condenser lens that changes the light source into substantially parallel light;
a beam splitter that separates the parallel light obtained through the medium of the first condenser lens and reflected light from the movable portion;
a photodetector that receives the reflected light separated by the beam splitter, and that detects a tilt amount of the mirror; and
a second condenser lens that is disposed between the beam splitter and the mirror, and that condenses the reflected light on the photodetector.

**38.** The mirror angle detecting device according to claim 37, wherein the beam splitter is a prism that has functions of allowing light from the light source to pass therethrough, and switching the optical path of the reflected light from the movable portion.

**39.** The mirror angle detecting device according to claim 37, wherein the beam splitter is a flat plate that has functions of allowing light from the light source to pass therethrough, and switching the optical path of the reflected light from the movable portion.

**40.** The mirror angle detecting device according to claim 37, wherein the condenser lens has a wavefront aberration of 0.01 λrms or more and 0.05 λrms or less, where λ is a wavelength of light.

**41.** The mirror angle detecting device according to claim 37, wherein the photodetector is a two-dimensional position sensitive detector.

**42.** The mirror angle detecting device according to claim 37, wherein the photodetector is a PSD or a quadripartite photodiode.

**Amended claims under Art. 19.1 PCT**

**1.** (Amended) A mirror angle detecting device, comprising:

a light source that projects light onto the reflecting surface of a turned mirror;
a first lens that changes light projected from the light source into substantially parallel light;
a beam splitter that separates the parallel light obtained through the medium of the first lens and reflected light from the mirror;
a photodetector that receives the reflected light separated by the beam splitter, and that detects a tilt amount of the mirror; and
a second lens that is disposed between the beam splitter and the mirror, and that condenses the reflected light on the photodetector,

wherein the focal length $f_1$ of the first lens and the focal length $f_2$ of the second lens are arranged to satisfy the relationship: $f_1 \geq f_2$.

**2.** (Amended) The mirror angle detecting device according to claim 1, wherein the beam splitter is a prism that has functions of allowing light from the light source to pass therethrough, and switching the optical path of the reflected light by the mirror.

**3.** (Amended) The mirror angle detecting device according to claim 1, wherein the beam splitter is a flat plate that has functions of allowing light from the light source to pass therethrough, and switching the optical path of the reflected light by the mirror.

**4.** (Amended) The mirror angle detecting device according to claim 1, wherein the second lens is configured to be disposed between the mirror and the beam splitter.

**5.** (Deleted)

**6.** (Deleted)

**7.** (Amended) The mirror angle detecting device according to claim 1, wherein the photodetector is a two-dimensional' position sensitive detector.

**8.** (Amended) The mirror angle detecting device according to claim 7, wherein the photodetector is a position sensitive detector (PSD) or a quadripartite photodiode.

**9.** (Deleted)

**10.** (Deleted)

**11.** (Deleted)

**12.** (Deleted)

**13.** (Amended) An optical signal switching system, comprising:

an input optical unit having at least one input optical portion through the inside of which an optical signal is transmitted;
a plurality of output optical units each of which has an output optical portion receiving the optical signal from the input optical unit, and allowing the optical signal to be transmitted through the inside of the output optical portion;
a support shaft disposed at substantially the center of the rear surface of a first mirror with a space therebetween;
a first mirror that is turned about the support shaft;
a second mirror disposed so as to be made substantially line-symmetrical by a line that passes through the support shaft and that is parallel to the first mirror, the second mirror being turned about the support shaft;
a light source projecting light onto the reflecting surface of the second mirror;
a lens that changes diverging light projected from the light source into substantially parallel light;
a beam splitter that separates the diverging light and reflected light from the second mirror;
a photodetector that receives the reflected light separated by the beam splitter, and that detects a tilt amount of the second mirror; and
at least one mirror angle detecting device in which the tilt amount of the first mirror is detected based on that of the second mirror,

wherein the optical signal switching system is configured so as to be able to selectively deflect the optical signal emitted from the input optical unit to one of the plurality of output units.

**14.** (Deleted)

**15.** (Deleted)

**16.** (Deleted)

**17.** (Deleted)

**18.** (Deleted)

**19.** (Deleted)

**20.** (Deleted)

**21.** (Deleted)

**22.** (Deleted)

**23.** (Deleted)

**24.** (Deleted)

**25.** (Deleted)

**26.** (Deleted)

**27.** (Deleted)

**28.** (Deleted)

**29.** (Deleted)

**30.** (Deleted)

**31.** (Deleted)

**32.** (Deleted)

**33.** (Deleted)

**34.** (Deleted)

**35.** (Deleted)

**36.** (Deleted)

**37.** (Deleted)

**38.** (Deleted)

**39.** (Deleted)

**40.** (Deleted)

**41.** (Deleted)

**42.** (Deleted)

**43.** (Added) The mirror angle detecting device according to claim 1, wherein the first lens is configured to be disposed between the light source and the beam splitter.

**44.** (Added) The mirror angle detecting device according to claim 1, wherein the beam splitter is constructed by integrally forming the first and second lenses.

**45.** (Added) A mirror angle detecting device, comprising:

a light source that projects light onto the reflecting surface of a turned mirror;
a first lens that changes light projected from the light source into substantially parallel light;
a beam splitter that separates the parallel light obtained through the medium of the first lens and reflected light by the mirror;
a photodetector that receives the reflected light separated by the beam splitter, and that detects a tilt amount of the mirror;

a second lens that is disposed between the beam splitter and the mirror, and that condenses the reflected light on the photodetector; and
a diaphragm disposed between the first lens and the beam splitter,

wherein the focal length $f_1$ of the first lens and the focal length $f_2$ of the second lens are arranged to satisfy the relationship: $f_1 \geq f_2$.

**46.** (Added) The mirror angle detecting device according to claim 45, wherein the first lens is configured to be disposed between the light source and the beam splitter.

**47.** (Added) The mirror angle detecting device according to claim 45, wherein the beam splitter is a prism that has functions of allowing light from the light source to pass therethrough, and switching the optical path of the reflected light by the mirror.

**48.** (Added) The mirror angle detecting device according to claim 45, wherein the beam splitter is a flat plate that has functions of allowing light from the light source to pass therethrough, and switching the optical path of the reflected light by the mirror.

**49.** (Added) The mirror angle detecting device according to claim 45, wherein the second lens is configured to be disposed between the mirror and the beam splitter.

**50.** (Added) The mirror angle detecting device according to claim 45, wherein the photodetector is a two-dimensional position sensitive detector.

**51.** (Added) The mirror angle detecting device according to claim 50, wherein the photodetector is a position sensitive detector (PSD) or a quadripartite photodiode.

**52.** (Added) A mirror angle detecting device, comprising:

a support shaft disposed at substantially the center of the rear surface of a first mirror with a space therebetween;
a first mirror that is turned about the support shaft;
a second mirror disposed so as to be made substantially line-symmetrical by a line that passes through the support shaft and that is parallel to the first mirror, the second mirror being turned about the support shaft;
a light source projecting light onto the reflecting surface of the second mirror;
a lens that changes diverging light projected from the light source into substantially parallel light; a beam splitter that separates the diverging light and reflected light from the second mirror; and
a photodetector that receives the reflected light separated by the beam splitter, and that detects a tilt amount of the second mirror,

wherein the tilt amount of the first mirror is detected based on that of the second mirror.

**53.** (Added) The mirror angle detecting device according to claim 52, wherein the beam splitter is a prism that has functions of allowing light from the light source to pass therethrough, and switching the optical path of the reflected light by the second mirror.

**54.** (Added) The mirror angle detecting device according to claim 52, wherein the beam splitter comprises a polarizing beam splitter and a $\lambda/4$ plate.

**55.** (Added) The mirror angle detecting device according to claim 52, wherein the lens is disposed between the second mirror and the beam splitter.

**56.** (Added) The mirror angle detecting device according to claim 52, wherein the lens is a lens having a plano-convex shape with respect to the second mirror.

**57.** (Added) The mirror angle detecting device according to claim 52, wherein the lens is a lens employing a diffractive optical element.

**58.** (Added) The mirror angle detecting device according to claim 52, wherein the lens is a Fresnel lens.

**59.** (Added) The mirror angle detecting device according to claim 52, wherein the reflecting surface of the second mirror is disposed so as to oppose the light projecting surface of the light source.

**60.** (Added) The mirror angle detecting device according to claim 52, wherein the photodetector is a two-dimensional position sensitive detector.

**61.** (Added) The mirror angle detecting device according to claim 60, wherein the photodetector is a position sensitive detector (PSD) or a quadripartite photodiode.

**62.** (Added) A mirror angle detecting device, comprising:

a support shaft disposed at substantially the center of the rear surface of a first mirror with a space therebetween;
a first mirror that is turned about the support shaft;
a second mirror disposed so as to be made substantially line-symmetrical by a line that passes through the support shaft and that is parallel to the first mirror, the second mirror being turned about the support shaft;
a light source projecting light onto the reflecting surface of the second mirror; a lens that changes diverging light projected from the light source into substantially parallel light;
a beam splitter that separates the diverging light and reflected light from the second mirror;
a diaphragm disposed between the beam splitter and the light source; and
a photodetector that receives the reflected light separated by the beam splitter, and that detects a tilt amount of the second mirror,

wherein the tilt amount of the first mirror is detected based on that of the second mirror.

**63.** (Added) The mirror angle detecting device according to claim 62, wherein the beam splitter is a prism that has functions of allowing light from the light source to pass therethrough, and switching the optical path of the reflected light by the second mirror.

**64.** (Added) The mirror angle detecting device according to claim 62, wherein the beam splitter comprises a polarizing beam splitter and a λ/4 plate.

**65.** (Added) The mirror angle detecting device according to claim 62, wherein the lens is disposed between the second mirror and the beam splitter.

**66.** (Added) The mirror angle detecting device according to claim 62, wherein the lens is a lens having a plano-convex shape with respect to the second mirror.

**67.** (Added) The mirror angle detecting device according to claim 62, wherein the lens is a lens employing a diffractive optical element.

**68.** (Added) The mirror angle detecting device according to claim 62, wherein the lens is a Fresnel lens.

**69.** (Added) The mirror angle detecting device according to claim 62, wherein the reflecting surface of the second mirror is disposed so as to oppose the light projecting surface of the light source.

**70.** (Added) The mirror angle detecting device according to claim 62, wherein the photodetector is a two-dimensional position sensitive detector (PSD).

**71.** (Added) The mirror angle detecting device according to claim 70, wherein the photodetector is a position sensitive detector (PSD) or a quadripartite photodiode.

**72.** (Added) An optical signal switching system, comprising:

an input optical unit having at least one input optical portion through the inside of which an optical signal is transmitted;

a plurality of output optical units each of which has an output optical portion receiving the optical signal from the input optical unit, and allowing the optical signal to be transmitted through the inside of the output optical portion;

a support shaft disposed at substantially the center of the rear surface of a first mirror with a space therebetween;

a first mirror turned about the support shaft;

a second mirror disposed so as to be made substantially line-symmetrical by a line that passes through the support shaft and that is parallel to the first mirror, the second mirror being turned about the support shaft;

a light source projecting light onto the reflecting surface of the second mirror; a lens that changes diverging light projected from the light source into substantially parallel light;

a beam splitter that separates the diverging light and reflected light from the second mirror; a diaphragm disposed between the beam splitter and the light source;

a photodetector that receives the reflected light separated by the beam splitter, and that detects a tilt amount of the second mirror; and

at least one mirror angle detecting device in which the tilt amount of the first mirror is detected based on that of the second mirror,

wherein the optical signal switching system is configured so as to be able to selectively deflect the optical signal emitted from the input optical unit to one of the plurality of output units.

**73.** (Added) The optical signal switching system according to claim 72, wherein the input optical unit comprises an optical fiber and a lens, and wherein the lens is configured to change projected light from the end face of the optical fiber into substantially parallel light.

**74.** (Added) The optical signal switching system according to claim 72, wherein each of the output optical units comprises an optical fiber and a lens, and wherein the lens is configured to condense the optical signal deflected by the first mirror on the end face of the optical fiber.

**75.** (Added) The optical signal switching system according to claim 72, wherein the angle detecting device provided in an optical signal path is disposed between the input optical unit and the output optical unit.

**76.** (Added) The optical signal switching system according to claim 72, wherein the first mirror comprises a galvano-mirror.

**77.** (Added) The optical signal switching system according to claim 13, wherein the input optical unit comprises an optical fiber and a lens, and wherein the lens is configured to render projected light from the end face of the optical fiber substantially parallel.

**78.** (Added) The optical signal switching system according to claim 13, wherein each of the output optical units comprises an optical fiber and a lens, and wherein the lens is configured to condense the optical signal deflected by the first mirror on the end face of the optical fiber.

**79.** (Added) The optical signal switching system according to claim 13, wherein the angle detecting device provided in an optical signal path is disposed between the input optical unit and the output optical unit.

**80.** (Added) The optical signal switching system according to claim 13, wherein the first mirror comprises a galvano-mirror.

# FIG.1

EP 1 484 575 A1

FIG.2

# FIG.3

EP 1 484 575 A1

# FIG.4

TILT DIRCTION OF
GALVANO-MIRROR

+10
DEGREES

0
DEGREE

-10
DEGREES

8

9a

# FIG.5

TILT IN X-DIRECTION

−   0   +

8

9b

−

0  TILT IN
Y-DIRECTION

+

# FIG.6

OUTPUT

P2

-10
DEGREES

TILT DIRECTION OF
GALVANO-MIRROR

+10
DEGREES

P1

# FIG.7

EP 1 484 575 A1

# FIG.8

TILT IN X-DIRECTION

–     0     +

8

11

10a      10b

10c      10d

–

0   TILT IN Y-DIRECTION

+

# FIG.9

OUTPUT

P4

+6 DEGREES

TILT DIRECTION OF GALVANO-MIRROR (X or Y)

-6 DEGREES

P3

# FIG.10

EP 1 484 575 A1

# FIG.11

EP 1 484 575 A1

# FIG.12

EP 1 484 575 A1

# FIG.13

EP 1 484 575 A1

# FIG.14

**TILT DIRECTION OF GALVANO-MIRROR**

+ DIRECTION      0 DEGREE      - DIRECTION

# FIG.15

## FIG.16

TILT IN X-DIRECTION
+    0    −

TILT IN Y-DIRECTION

Y
X

31
32b

## FIG.17

TILT IN X-DIRECTION
+    0    −

31b
31a
32
31c
31
31d

TILT IN Y-DIRECTION

Y
X

# FIG.18

EP 1 484 575 A1

# FIG.19

EP 1 484 575 A1

# FIG.20

EP 1 484 575 A1

Oy

51

Ox

Y

56

55

54

53

57-9

58-9

57-1

58-1

X

57-3

57-2

58-2

58-3

# FIG.21

| **INTERNATIONAL SEARCH REPORT** | International application No. |
|---|---|
| | PCT/JP02/11092 |

A. CLASSIFICATION OF SUBJECT MATTER
Int.Cl$^7$  G01B11/26

According to International Patent Classification (IPC) or to both national classification and IPC

B. FIELDS SEARCHED

Minimum documentation searched (classification system followed by classification symbols)
Int.Cl$^7$  G01B9/00-11/30

Documentation searched other than minimum documentation to the extent that such documents are included in the fields searched
Jitsuyo Shinan Koho        1922-1996    Toroku Jitsuyo Shinan Koho    1994-2003
Kokai Jitsuyo Shinan Koho  1971-2003    Jitsuyo Shinan Toroku Koho    1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| | Microfilm of the specification and drawings annexed to the request of Japanese Utility Model Application No. 22975/1990 (Laid-open No. 114007/1991) (Japan Aviation Electronics Industry Ltd.), 22 November, 1991 (22.11.91), | |
| X | Full text; all drawings | 1-12,33-42 |
| Y | Full text; all drawings (Family: none) | 13-32 |
| Y | JP 63-73218 A  (Olympus Optical Co., Ltd.), 02 April, 1988 (02.04.88), Full text; all drawings (Family: none) | 13-32 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 January, 2003 (24.01.03) | 04 February, 2003 (04.02.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP02/11092

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-187933 A (Hitachi Maxell, Ltd.), 24 July, 1990 (24.07.90), Full text; all drawings (Family: none) | 1-42 |
| A | JP 11-144274 A (Asahi Optical Co., Ltd.), 28 May, 1999 (28.05.99), Full text; all drawings (Family: none) | 1-42 |
| A | Microfilm of the specification and drawings annexed to the request of Japanese Utility Model Application No. 135440/1982 (Laid-open No. 41303/1984) (Sumitomo Electric Industries, Ltd.), 16 March, 1984 (16.03.84), Full text; all drawings (Family: none) | 12 |

Form PCT/ISA/210 (continuation of second sheet) (July 1998)